# EUROPEAN PATENT APPLICATION

(11) **EP 4 790 999 A1**
(43) Date of publication of application: **12.08.2026**
(21) Application number: 24874932.7
(22) Date of filing: 02.10.2024
(51) Int. Cl.: H04N 19/70, H04N 19/31, H04N 19/184

(54) **IMAGE ENCODING/DECODING METHOD, METHOD FOR TRANSMITTING BITSTREAM, AND RECORDING MEDIUM HAVING BITSTREAM STORED THEREIN**

(30) Priority: 04.10.2023 US 202363542300 P
(71) Applicant: LG Electronics Inc., Seoul 07336 (KR)
(72) Inventor: TAN, Hendry, Seoul 06772 (KR); NAM, Junghak, Seoul 06772 (KR); LIM, Jaehyun, Seoul 06772 (KR); KIM, Seunghwan, Seoul 06772 (KR)
(74) Representative: Mooser, Sebastian Thomas
(86) International application number: PCT/KR2024/014926
(87) International publication number: WO 2025/075376

(57) **Abstract**

Provided are an image encoding/decoding method, a bitstream transmission method, and a computer-readable recording medium storing a bitstream. The image decoding method according to the present disclosure comprises the steps of: acquiring a source picture timing information (SPTI) supplemental enhancement information (SEI) message; and reconstructing an image on the basis of the SPTI SEI message, wherein the SPTI SEI message may include information regarding source picture timing for a picture associated with SEI.

## Description

### [Technical Field]

The present disclosure relates to an image encoding/decoding method, a method for transmitting a bitstream, and a recording medium having a bitstream stored therein, and more particularly, to an image encoding/decoding method, a method for transmitting a bitstream, and a recording medium having a bitstream stored therein, related to source picture timing.

### [Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### [Disclosure]

### [Technical Problem]

An object of the present disclosure is to provide an image encoding/decoding method and apparatus with improved encoding/decoding efficiency.

Another object of the present disclosure is to provide a method of coding and processing an SPTI SEI message.

Another object of the present disclosure is to more clearly specify source picture timing associated with an SPTI SEI message.

Another object of the present disclosure is to clarify the meaning of picture 0 for deriving source picture timing.

Another object of the present disclosure is to reduce decoder errors and improve coding quality and efficiency by clarifying the meaning of information related to picture 0 and source picture timing.

Another object of the present disclosure is to improve coding efficiency by clarifying constraints on picture 0.

Another object of the present disclosure is to provide a non-transitory computer-readable recording medium having stored therein a bitstream generated by an image encoding method according to the present disclosure.

Another object of the present disclosure is to provide a non-transitory computer-readable recording medium having stored therein a bitstream received and decoded by an image decoding apparatus according to the present disclosure, which is used to reconstruct images.

Another object of the present disclosure is to provide a method of transmitting a bitstream generated by an image encoding method according to the present disclosure.

The objects to be achieved by the present disclosure are not limited to those mentioned above, and other technical objects not explicitly stated will become apparent to those skilled in the art from the description provided below.

### [Technical Solution]

An image decoding method according to an embodiment of the present disclosure may include acquiring a source picture timing information (SPTI) supplemental enhancement information (SEI) message, and reconstructing an image based on the SPTI SEI message, wherein the SPTI SEI message may include information on source picture timing for a picture related to SEI.

An image encoding method according to an embodiment of the present disclosure may include determining a source picture timing information (SPTI) supplemental enhancement information (SEI) message, and encoding a bitstream including the SPTI SEI message, wherein the SPTI SEI message may include information on source picture timing for a picture related to SEI.

Further, according to the present disclosure, a non-transitory computer-readable recording medium having stored therein a bitstream generated by an image encoding method may be provided.

Further, according to the present disclosure, a non-transitory computer-readable recording medium having stored therein a bitstream received and decoded by an image decoding apparatus for use in reconstructing images may be provided.

Further, according to the present disclosure, a method of transmitting a bitstream generated by an image encoding method may be provided.

The features of the present disclosure briefly summarized above are merely exemplary aspects described in the following detailed description and are not intended to limit the scope of the present disclosure.

### [Advantageous Effects]

According to the present disclosure, an image encoding/decoding method and apparatus with improved encoding/decoding efficiency may be provided.

Further, according to the present disclosure, meaning may be delivered more clearly and decoder errors may be reduced by modifying semantics of information in an SPTI SEI message.

Further, according to the present disclosure, coding quality and efficiency may be improved through clear derivation of source picture timing associated with an SPTI SEI message.

Further, according to the present disclosure, coding quality and efficiency may be improved by more clearly specifying the meaning of picture 0 for source picture timing.

Further, according to the present disclosure, a non-transitory computer-readable recording medium having stored therein a bitstream generated by an image encoding method may be provided.

Further, according to the present disclosure, a non-transitory computer-readable recording medium having stored therein a bitstream received and decoded by an image decoding apparatus for use in reconstructing images may be provided.

Further, according to the present disclosure, a method of transmitting a bitstream generated by an image encoding method may be provided.

The effects obtainable in the present disclosure are not limited to the above-mentioned effects, and other effects not mentioned may be clearly understood by those of ordinary skill in the art from the following description.

### [Brief Description of the Drawings]

FIG. 1 is a view schematically showing an example of a video coding system to which an embodiment of the present disclosure is applicable.
FIG. 2 is a view schematically showing an image encoding apparatus to which an embodiment of the present disclosure is applicable.
FIG. 3 is a view schematically showing an image decoding apparatus to which an embodiment of the present disclosure is applicable.
FIG. 4 is a diagram illustrating an interleaved method for deriving a luma channel.
FIG. 5 is a flowchart illustrating an image decoding method to which an embodiment according to the present disclosure is applicable.
FIG. 6 is a flowchart illustrating an image encoding method to which an embodiment according to the present disclosure is applicable.
FIG. 7 is a diagram exemplarily illustrating a content streaming system to which an embodiment according to the present disclosure is applicable.

### [Mode for Disclosure]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

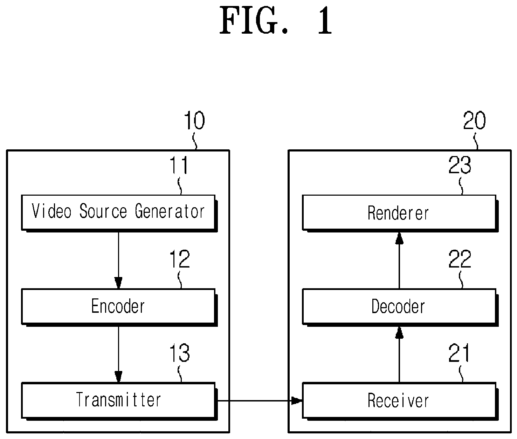

FIG. 1 is a view schematically showing an example of a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit (otherwise referred to as an encoder) 12 and a transmitter 13. The decoding apparatus 20 according to an embodiment may include a receiver 21, a decoding unit (otherwise referred to as a decoder) 22 and a renderer 23. The encoder 12 may be called a video/image encoding apparatus, and the decoding unit 22 may be called a video/image decoding apparatus. The transmitter 13 may be included in the encoder 12. The receiver 21 may be included in the decoding unit 22. The renderer 23 may include a display and the display may be configured as a separate device or an external component.

The video source generator 11 may acquire a video/image through a process of capturing, synthesizing, or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may electronically generate video/images. For example, a virtual video/image may be generated through a computer or the like. In this case, the video/image capturing process may be replaced by a process of generating related data.

The encoder 12 may encode an input video/image. The encoder 12 may perform a series of procedures such as prediction, transform, and quantization for compression and coding efficiency. The encoder 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming data. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming data. The receiver 21 may extract/receive the bitstream from the storage medium or network and transmit the bitstream to the decoding unit 22.

The decoding unit 2 may decode a video/image by performing dequantization, inverse transform, prediction, etc. corresponding to the operation of the encoder 12.

The renderer 23 may render the decoded video/image. The rendered video/image may be displayed through the display.

### Overview of image encoding apparatus

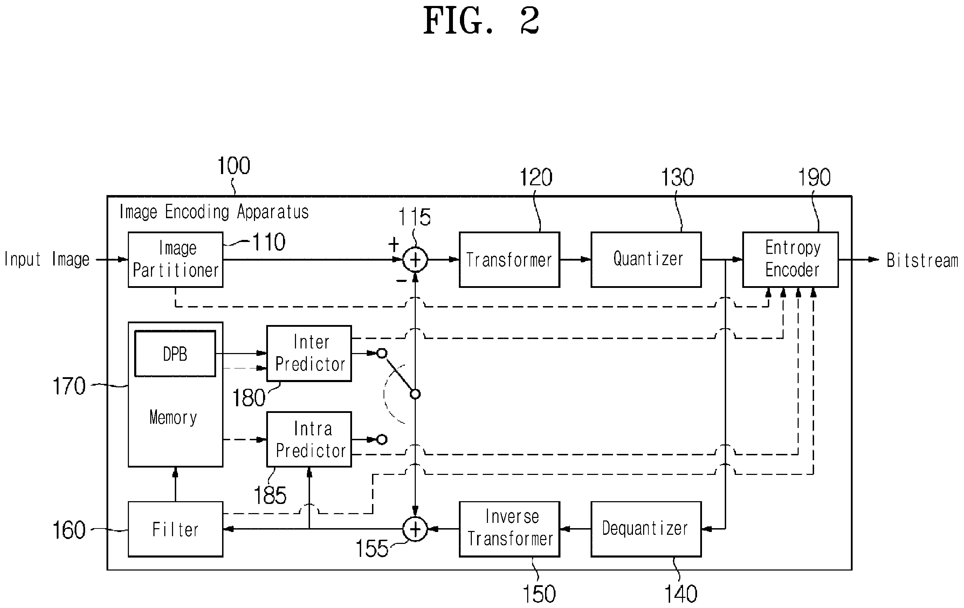

FIG. 2 is a view schematically showing an image encoding apparatus to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first, and the binary tree structure and/or ternary structure may be applied later. The coding procedure according to embodiments of the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit (intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit (inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loeve transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter predictor 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter predictor 180. The memory 170 may store the motion information of the block from which the motion information in the current picture is derived (or encoded) and/or the motion information of the blocks in the picture that have already been reconstructed. The stored motion information may be transmitted to the inter predictor 180 and used as the motion information of the spatial neighboring block or the motion information of the temporal neighboring block. The memory 170 may store reconstructed samples of reconstructed blocks in the current picture and may transfer the reconstructed samples to the intra predictor 185.

### Overview of image decoding apparatus

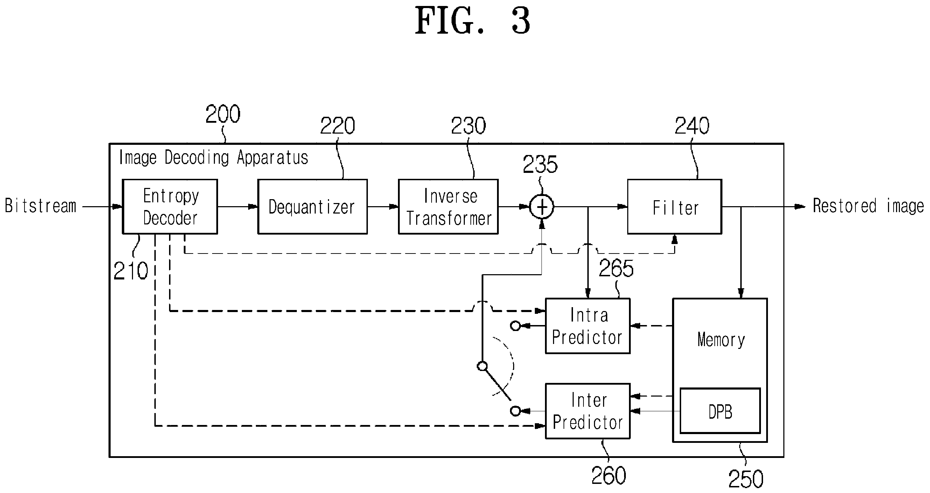

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra predictor 265. The inter predictor 260 and the intra predictor 265 may be collectively referred to as a "predictor." The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and outputs values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the predictor (the inter predictor 260 and the intra predictor 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. A receiver (not shown) for receiving a signal output from the image encoding apparatus may be further configured as an internal/external element of the image decoding apparatus 200, or the receiver may be a component of the entropy decoder 210.

The image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The predictor may perform prediction on the current block and generate a predicted block including prediction samples for the current block. The predictor may determine whether intra prediction or inter prediction is applied to the current block based on the information on the prediction output from the entropy decoder 210 and may determine a specific intra/inter prediction mode (prediction technique).

It is the same as described for the predictor of the image encoding apparatus 100 that the predictor may generate the prediction signal based on various prediction methods (techniques) which will be described later.

The intra predictor 265 may predict the current block by referring to the samples in the current picture. The description of the intra predictor 185 is equally applied to the intra predictor 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra predictor 265.

In the present disclosure, the embodiments described in relation to the filter 160, the inter predictor 180, and the intra predictor 185 of the image encoding apparatus 100 may be equally or correspondingly applied to the filter 240, the inter predictor 260, and the intra predictor 265 of the image decoding apparatus 200.

### General post-processing filtering process using NNPFs

Input to the post-processing filtering process may be a bitstream BitstreamToFilter. Output of the process may be a list of NNPF output pictures ListNnpfOutputPics. First, BitstreamToFilter may be decoded, and the list CroppedDecodedPictures may be set to be the list of the cropped decoded pictures in output order resulted from decoding BitstreamToFilter. Next, the post-processing filtering process for one picture may be repeatedly invoked, in output order, for each cropped decoded picture that is in CroppedDecodedPictures and one or more NNPFs may be activated for the corresponding pictures. The order of the pictures in ListNnpfOutputPics may be an output order. Within ListNnpfOutputPics, there shall be no more than one picture pertaining to any particular output time instance. When there are multiple NNPFs activated for any particular picture in CroppedDecodedPictures and only one of the NNPFs is allowed to be chosen to be applied (any of the NNPFs may be chosen), the above constraint shall apply regardless of which NNPF is chosen to be applied to the particular picture.

The post-processing filtering process may apply to each cropped decoded picture, referred to as the current picture, that is in CroppedDecodedPictures and one or more NNPFs may be activated. When applying an NNPF to the current picture, filtered and/or interpolated pictures may be generated by the NNPF by applying the NNPF process specified in the semantics of the NNPFC SEI message. When applying an NNPF to the current picture, the order of the pictures generated by the NNPF by applying the NNPF process being stored in the output tensor of the NNPF may be output order. When the applied NNPF is the last NNPF that is applied to the current picture, the pictures generated by the NNPF and output by the NNPF process may be included into ListNnpfOutputPics, in the same order as when the pictures are stored into the output tensor of the NNPF.

### Neural-network post-filter characteristics (NNPFC)

The combination of Tables 1 to 3 shows an NNPFC syntax structure.

**[Table 1]**

| | |
|---|---|
| nn_post_filter_characteristics( payloadSize ) { | **Descriptor** |
| **nnpfc_purpose** | **u(16)** |
| **nnpfc_id** | ue(v) |
| **nnpfc_base_flag** | u(1) |
| **nnpfc_mode_idc** | ue(v) |
| if( nnpfc_mode_idc == 1 ) { | |
| while( !byte_aligned( ) ) | |
| **nnpfc_reserved_zero_bit_a** | u(1) |
| **nnpfc_tag_uri** | st(v) |
| **unpfc_uri** | st(v) |
| } | |
| **nnpfc_property_present_flag** | u(1) |
| if( nnpfc_property_present_flag ) { | |
| /*** input and output formatting ***/ | |
| **nnpfc_num_input_pics_minus1** | ue(v) |
| if( nnpfc_num input_pics_minus1 > 0 ) { | |
| for( i = 0; i <= nnpfc num input_pics_minus1; i++ ) | |
| **nnpfc_input_pic_output_flag[** i ] | u(1) |
| **nnpfc_absent_input_pic_zero_flag** | u(1) |
| } | |
| if( chromaUpsamplingFlag ) | |
| **nnpfc_out_sub_c_flag** | u(1) |
| if( colourizationFlag ) | |
| **nnpfc_out_colour_format_idc** | u(2) |
| if( resolutionResamplingFlag ) { | |
| **unpfc_pic_width_num_minus1** | ue(v) |
| **nnpfc_pic_width_denom_minus1** | ue(v) |
| **nnpfc_pic_height_num_minus1** | ue(v) |
| **nnpfc_pic_height_denom_minus1** | ue(v) |
| } | |
| if( pictureRateUpsamplingFlag ) | |
| for( i = 0; i < nnpfc_num_input_pics_minus1; i++ ) | |
| **nnpfc_interpolated_pics[** i ] | ue(v) |
| **nnpfc_component_last_flag** | u(1) |
| **nnpfc_inp_format_idc** | ue(v) |
| **nnpfc_auxiliary_inp_idc** | ue(v) |

**[Table 2]**

| | |
|---|---|
| **nnpfc_inp_order_idc** | ue(v) |
| if( nnpfc _inp_format_ide = = 1 ) { | |
| if( nnpfc_inp_order_idc != 1 ) | |
| **nnpfc_inp tensor luma_bitdepth minus8** | ue(v) |
| if( nnpfc_inp_order_idc != 0 ) | |
| **nnpfc_inp tensor chroma bitdepth minus8** | ue(v) |
| } | |
| **nnpfc_out_format_idc** | ue(v) |
| **nnpfc_out_order_idc** | ue(v) |
| if( nnpfc_out_format_idc = = 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour_primaries** | u(8) |
| **nnpfc_transfer_characteristics** | u(8) |
| if( nnpfc_out_format_idc == 1 ) { | |
| **nnpfc_matrix_coeffs** | u(8) |
| **nnpfc_full_range_flag** | u(1) |
| **}** | |
| } | |
| **nnpfc_chroma_loc_info_present_flag** | u(1) |
| if( nnpfc_chroma_loc_info_present_flag) | |
| **nnpfc_chroma_sample_loc_type_frame** | ue(v) |
| **nnpfc_overlap** | ue(v) |
| **nnpfc_constant_patch_size_flag** | u(1) |
| if( nnpfc_constant_patch_size_flag ) { | |
| **nnpfc_patch_width_minus1** | ue(v) |
| **nnptc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |

**[Table 3]**

| | |
|---|---|
| **nnpfc_padding_type** | ue(v) |
| if( nnpfc_padding_type = = 4 ) { | |
| if( nnpfc_inp_order_idc != 1 ) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_ parameter type idc** | u(2) |
| if( nnpfc_parameter_type_idc != 2 ) | |
| **nnpfc_log2_parameter_bit_length_minus3** | u(2) |
| **unpfc_num_parameters_idc** | u(6) |
| **nnpfc_num_kmac_operations**_**idc** | ue(v) |
| **nnpfc_total_kilobyte_size** | ue(v) |
| } | |
| **unpfc_metadata_extension_num_bits** | ue(v) |
| if( nnpfc_metadata_extension_num_bits > 0 ) | |
| **nnpfc_reserved_metadata_extension** | u(v) |
| } | |
| /* ISO/IEC 15938-17 bitstream */ | |
| if( nnpfc_mode_idc == 0 ) { | |
| while( !byte_aligned( ) ) | |
| **unpfc_reserved_zero_bit_b** | u(1) |
| for( i = 0; more_data_in_payload( ); i++ ) | |
| **nnpfc_payload_byte[** i ] | b(8) |
| } | |
| } | |

The NNPFC syntax structures of Tables 1 to 3 may be signaled in the form of a supplemental enhancement information (SEI) message. An SEI message signaling the NNPFC syntax structures of Tables 1 to 3 may be referred to as an NNPFC SEI message.

The NNPFC SEI message may specify a neural network that may be used as a post-processing filter. The use of specified neural-network post-processing filters for specific pictures may be indicated with neural-network post-filter activation (NNPFA) SEI messages. Here, the terms 'post-processing filter' and 'post-filter' may have the same meaning.

Use of these SEI messages requires the definition of the following variables:
- The width and height of an input picture may be cropped in units of luma samples. The width and height may be denoted herein by CroppedWidth and CroppedHeight, respectively.
- The luma sample array CroppedYPic[idx] and the chroma sample arrays CroppedCbPic[idx] and CroppedCrPic[idx] of the input pictures, when present, may be used as input to an NNPF. Here, the index idx may range from 0 to numInputPics - 1.
- BitDepth_{Y} may indicate the bit depth for the luma sample array of the input pictures.
- BitDepthc may indicate the bit depth for the chroma sample arrays, if any, of the input pictures.
- ChromaFormatIdc may indicate the chroma format identifier.
- When nnpfc_auxiliary_inp_ide is equal to 1, a filtering strength control value array StrengthControlVal[idx] shall contain real numbers in the range of 0 to 1 for the input pictures, where the index idx may be in the range of 0 to numInputPics - 1.

An input picture with index 0 may correspond to the picture for which the NNPF defined by the NNPFC SEI message is activated by an NNPFA SEI message. An input picture with index i in the range of 1 to numInputPics - 1, inclusive, may precede an input picture with index i - 1 in output order.

nnpfc_purpose indicates the purpose of the NNPF as specified in Table 20, where ( nnpfc_purpose & bitMask ) not equal to 0 indicates that the NNPF has the purpose associated with the value of bitMask in Table 4. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application. The value of nnpfc_purpose may be constrained to be in the range of 0 to 63 in bitstreams. Values of 64 to 65 535 for nnpfc_purpose may be reserved for future use. Decoders shall ignore NNPFC SEI messages with nnpfc_purpose in the range of 64 to 65 535.

**[Table 4]**

| **bitMask** | **Interpretation** |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |

The variable chromaUpsamplingFlag, which indicates whether the purpose of the NNPF indicated by nnpfc_purpose is chroma upsampling, the variable resolutionResamplingFlag, which indicates whether the purpose of the NNPF indicated by nnpfc_purpose is resolution resampling, the variable pictureRateUpsamplingFlag, which indicates whether the purpose of the NNPF indicated by nnpfc_purpose is picture rate upsampling, the variable bitDepthUpsamplingFlag, which indicates whether the purpose of the NNPF indicated by nnpfc_purpose is bit depth upsampling, and the variable colourizationFlag, which indicates whether the purpose of the NNPF indicated by nnpfc_purpose is colourization, may be derived as shown in Table 5 below.

**[Table 5]**

| |
|---|
| chromaUpsamplingFlag = ( ( nnpfc_purpose & 0x02 ) > 0 ) ? 1 : 0 |
| resolutionResamplingFlag = ( ( nnpfc_purpose & 0x04 ) > 0 ) ? 1 : 0 |
| pictureRateUpsamplingFlag = ( ( nnpfc_purpose & 0x08 ) > 0 ) ? 1 : 0 |
| bitDepthUpsamplingFlag = ( ( nnpfc_purpose & 0x10 ) > 0 ) ? 1 : 0 |
| colourizationFlag = ( ( nnpfc_purpose & 0x20 ) > 0 ) ? 1 : 0 |

When ChromaFormatIdc is equal to 3, chromaUpsamplingFlag may be constrained to be equal to 0. When ChromaFormatIdc or chromaUpsamplingFlag is not equal to 0, colourizationFlag may be constrained to be equal to 0. When pictureRateUpsamplingFlag is equal to 1 and the input picture with index 0 is associated with a frame packing arrangement SEI message with fp_arrangement_type equal to 5, all input pictures may be associated with a frame packing arrangement SEI message with fp_arrangement_type equal to 5 and the same value of fp_current_frame_is_frame0_flag.

nnpfc_id may contain an identification number that may be used to identify an NNPF. The value of nnpfc_id shall be in the range of 0 to 2³² - 2. Values of nnpfc_id in the range of 256 to 511 and 2³¹ to 2³² - 2 may be reserved for future use. Decoders shall ignore NNPFC SEI messages with nnpfc_id in the range of 256 to 511 or 2³¹ to 2³² - 2.

When an NNPFC SEI message is the first NNPFC SEI message, in decoding order, that has a particular value of nnpfc_id within the current CLVS, the following may apply:
- The SEI message may indicate a base NNPF.
- The SEI message may pertain to the current decoded picture and all subsequent decoded pictures of the current layer, in output order, until the end of the current CLVS.

An NNPFC SEI message may be a repetition of a previous NNPFC SEI message, in decoding order, within the current CLVS, and the subsequent semantics may apply as if this SEI message were the only NNPFC SEI message havnig the same content within the current CLVS.

nnpfc_base_flag equal to 1 may specify that the SEI message may specify the base NNPF. nnpf_base_flag equal to 0 may specify that the SEI message specifies an update related to the base NNPF.

The following constraints may apply to the value of nnpfc_base_flag.
- When an NNPFC SEI message is the first NNPFC SEI message, in decoding order, that has a particular value of nnpfc_id within the current CLVS, the value of nnpfc_base_flag shall be equal to 1.
- When an NNPFC SEI message nnpfcB is not the first NNPFC SEI message, in decoding order, that has a particular value of nnpfc_id within the current CLVS and the value of nnpfc_base_flag is equal to 1, the NNPFC SEI message may correspond to a repetition of the first NNPFC SEI message nnpfcA with the same value of nnpfc_id, in decoding order. That is, the payload content of nnpfcB shall be the same as that of nnpfcA.

When nnpfc_base_flag is equal to 0, the following constraints may apply:
- This SEI message may define an update related to the preceding base NNPF in decoding order with the same value of nnpfc_id. Updates are not cumulative but rather each update may be applied on the base NNPF, which is the NNPF specified by the first NNPFC SEI message, in decoding order, that has a particular value of nnpfc_id within the current CLVS. The NNPF defined by this SEI message may be obtained by applying the update defined by this SEI message related to the base NNPF with the same value of nnpfc_id.
- This SEI message may pertain to the current decoded picture and all subsequent decoded pictures of the current layer, in output order, until the end of the current CLVS, wherein the decoded picture that follows the current decoded picture in output order within the current CLVS may be excluded. This SEI message may be associated with a subsequent NNPFC SEI message, in decoding order, having nnpfc_base_flag equal to 0 and the particular value of nnpfc_id within the current CLVS, whichever is earlier.

nnpfc_mode_idc equal to 0 may indicate that the SEI message contains an bitstream that may specify a base NNPF (when nnpfc_base_flag is equal to 1) or is an update relative to the base NNPF with the same value of nnpfc_id (when nnpfc_base_flag is equal to 0). When nnpfc_base_flag is equal to 1, nnpfc**_**mode_idc equal to 1 may specify that the base NNPF associated with the value of nnpfc_id is a neural network identified by the URI, which may be indicated by nnpfc_uri with the format identified by the tag URI nnpfc_tag_uri. When nnpfc_base_flag is equal to 0, nnpfc_mode_idc equal to 1 may specify that an update related to the base NNPF with the same value of nnpfc_id is defined by the URI, which may be indicated by nnpfc_uri with the format identified by the tag URI nnpfc_tag_uri.

The value of nnpfc_mode_idc may be constrained to be in the range of 0 to 1 in bitstreams. Values of 2 to 255 for nnpfc_mode_idc may be reserved for future use and may not be present in the bitstreams. Decoders shall ignore NNPFC SEI messages with nnpfc_mode_idc in the range of 2 to 255. Values of nnpfc_mode_idc greater than 255 may not be present in bitstreams and may not be reserved for future use.

nnpfc_reserved_zero_bit_a may be constrained to be equal to 0 according to contratins of bitstreams. Decoders may be constrained to ignore NNPFC SEI messages in which nnpfc_reserved_zero_bit_a is not equal to 0.

nnpfc_tag_uri may contain a tag URI with syntax and semantics as specified in IETF RFC 4151 identifying the neural network used as a base NNPF or an update related to the base NNPF with the value of nnpfc_id specified by nnpfc_uri. nnpfc_tag_uri may enable uniquely identification of the format of neural network data specified by nnrpf_uri without the need for a central registration authority. nnpfc_tag_uri equal to "tag:iso.org,2023:15938-17" may indicate that the neural network data identified by nnpfc_uri conforms to ISO/IEC 15938-17.

nnpfc_uri may contain a URI with syntax and semantics as specified in IETF Internet Standard 66 identifying the neural network used as a base NNPF or an update related to the base NNPF with the same value of nnpfc_id.

nnpfc_property_present_flag equal to 1 may indicate that syntax elements related to the filter purpose, input formatting, output formatting, and complexity are present. nnpfc_property_present_flag equal to 0 may specify that no syntax elements related to the filter purpose, input formatting, output formatting, and complexity are present. When nnpfc_base_flag is equal to 1, nnpfc_property_present_flag may be constrained to be equal to 1. When nnpfc_property_present_flag is equal to 0, the values of all syntax elements that may be present only when nnpfc_property_present_flag is equal to 1 may be inferred to be equal to the values of their corresponding syntax elements, respectively, in the NNPFC SEI message that may contain the base NNPF for which this SEI message provides an update.

When an NNPFC SEI message nnpfcCurr is not the first NNPFC SEI message, in decoding order, that has a particular value of nnpfc_id within the current CLVS, and is not a repetition of the first NNPFC SEI message with a particular value of nnpfc_id (i.e., the value of nnpfc_base_flag is equal to 0), and nnpfc_property_present_flag is equal to 1, the following constraints may apply.

- The value of nnpfc_purpose in the NNPFC SEI message shall be equal to the value of nnpfc_purpose in the first NNPFC SEI message, in decoding order, that has the particular value of nnpfc_id within the current CLVS.

- The values of syntax elements nnpfc_base_flag and preceding nnpfc_complexity_info_present_flag in the NNPFC SEI message shall be the same as the values of corresponding syntax elements in the first NNPFC SEI message, in decoding order, that has the particular value of nnpfc__id within the current CLVS.

- Either nnpfc_complexity_info_present_flag shall be equal to 0 or both nnpfc_complexity_info_present_flag shall be equal to 1 in the first NNPFC SEI message, in decoding order, that has the particular value of nnpfc_id within the current CLVS and all the following may apply.
(1) nnpfc__parameter_type_idc in nnpfcCurr shall be equal to nnpfc__parameter_type_idc in nnpfcBase.
(2) nnpfc _log2_parameter_bit_length_minus3 in nnpfcCurr, when present, shall be less than or equal to nnpfc_log2_parameter_bit_length_minus3 in nnpfcBase.
(3) If nnpfc_num_parameters_idc in nnpfcBase is equal to 0, nnpfc_num_parameters_idc in nnpfcCurr shall be equal to 0.
(4) Otherwise (if nnpfc_num_parameters_ide in nnpfcBase is greater than 0), nnpfc_num_parameters_ide in nnpfcCurr shall be greater than 0 and less than or equal to nnpfc_num_parameters_idc in nnpfcBase.
(5) If nnpfc_num_kmac_operations_idc in nnpfcBase is equal to 0, nnpfc_num_kmac_operations_idc in nnpfcCurr shall be equal to 0.
(6) Otherwise (if nnpfc_num_kmac_operations_idc in nnpfcBase is greater than 0), nnpfc_num_kmac_operations_idc in nnpfcCurr shall be greater than 0 and less than or equal to nnpfc_num_kmac_operations_idc in nnpfcBase.
(7) If nnpfc_total_ki0lobyte_size in nnpfcBase is equal to 0, nnpfc_total_kilobyte_size in nnpfcCurr shall be equal to 0.
(8) Otherwise (if nnpfc_total_kilobyte_size in nnpfcBase is greater than 0), nnpfc_total_kilobyte_size in nnpfcCurr shall be greater than 0 and less than or equal to nnpfc_total_kilobyte_size in nnpfcBase.

nnpfc num input_pics_minus1 + 1 may indicate the number of decoded output pictures used as input to the NNPF. The value of nnpfc_num_input_pics_minus1 may be constrained to be in the range of 0 to 63. When pictureRateUpsamplingFlag is equal to 1, nnpfc_num_input_pics_minus1 may be constrained to be greater than 0.

The variable numInputPics, specifying the number of pictures used as input to the NNPF, may be derived as shown in Equation 1.$numInputPics = nnpfc_num_input_pics_minus 1 + 1$

nnpfc_input_pic_output_flag[ i ] equal to 1 may indicate that for the i-th input picture, the NNPF generates a corresponding output picture. nnpfc_input_pic_output_flag[ i ] equal to 0 may indicate that for the i-th input picture, the NNPF does not generate a corresponding output picture. When nnpfc_num_input_pics_minus1 is equal to 0, nnpfc _input_pic_output_flag[ 0 ] may be inferred to be equal to 1. When pictureRateUpsamplingFlag is equal to 0 and nnpfc_num_input_pics_minus1 is greater than 0, nnpfc _input_pic_output_flag[ i ] may be constrained to be equal to 1 for at least one value of i in the range of 0 to nnpfc_num_input_pics_minus1. nnpfc _input_pic_output_flag[ i ] may be referred to as nnpfc_input_pic_filtering_flag[ i ].

nnpfc_absent_input_pic_zero_flag equal to 1 may indicate that the NNPF expects an input picture that is not present in the bitstream to be represented by sample arrays with sample values equal to 0. nnpfc_absent_input_pic_flag equal to 0 may indicate that the NNPF expects an input picture that is not present in the bitstream to be represented by the closest input picture in output order within the bitstream.

nnpfc_out_sub_c_flag may specify the values of the variables outSubWidthC and outSubHeightC when chromaUpsamplingFlag is equal to 0. nnpfc_out_sub_c_flag equal to 1 may specify that outSubWidthC is equal to 1 and outSubHeightC is equal to 1. nnpfc_out_sub_c_flag equal to 0 may specify that outSubWidthC is equal to 2 and outSubHeightC is equal to 1. When ChromaFormatIdc is equal to 2 and nnpfc_out_sub_c_flag is present, the value of nnpfc_out_sub_c_flag shall be equal to 1.

nnpfc_out_colour_format_idc, when colourizationFlag is equal to 1, may specify the color format of the NNPF output and consequently the values of the variables outSubWidthC and outSubHeightC. nnpfc_out_colour_format_idc equal to 1 may specify that the color format of the NNPF output is the 4:2:0 format and outSubWidthC and outSubHeightC are both equal to 2. nnpfc_out_colour_format_idc equal to 2 may specify that the color format of the NNPF output is the 4:2:2 format, outSubWidthC is equal to 2, and outSubHeightC is equal to 1. nnpfc_outcolour_format_idc equal to 3 may specify that the color format of the NNPF output is the 4:4:4 format and outSubWidthC and outSubHeightC are both equal to 1. The value of nnpfc_out_colour_format_idc may be constrained not to be equal to 0. When chromaUpsamplingFlag and colourizationFlag are both equal to 0, outSubWidthC and outSubHeightC may be inferred to be equal to SubWidthC and SubHeightC, respectively.

nnpfc_pic_width_num_minus1+1 and nnpfc_pic_width_denom_minus1+1 may specify the numerator and denominator, respectively, for the resampling ratio of the NNPF output picture width relative to CroppedWidth. The value of ( nnpfc_pic_width_num_minus1 + 1 ) divided by ( nnpfc_picwidth_denom_minus1 + 1 ) shall be in the range of 1/16 to 16, inclusive. When nnpfc_pic_width_num_minus1 and nnpfc_pic_width_denom_minus1 are not present, nnpfc_pic_width_num_minus1 and nnpfc_pic_width_denom_minus1 may both be inferred to be equal to 0.

The variable nnpfcOutputPicWidth, indicating the width of the luma sample arrays of the picture(s) resulting from applying the NNPF identified by nnpfc_id to the input picture(s), may be derived as shown in Equation 2. $nnpfcOutputPicWidth = Ceil \left(CroppedWidth*\left(nnpfc_pic_width_num_minus1+1\right)\div \left(\begin{matrix} \\ nnpfc_pic_width_denom _ minus 1 + 1\end{matrix}\right)\right)$

The remainder of nnpfcOutputPicWidth divided by outSubWidthC shall be equal to 0.

nnpfc_pic_height_num_minus1+1 and nnpfc_pic_height_denom_minus1+1 may specify the numerator and denominator, respectively, for the resampling ratio of the NNPF output picture height relative to CroppedHeight. The value of ( nnpfc_pic_height_num_minus1 + 1 ) divided by ( nnpfc_pic_height_denom_minus 1 + 1 ) shall be within the range of 1/16 to 16, inclusive. When nnpfc_pic_height_num minus1 and nnpfc_pic_height_denom_minus1 are not present, nnpfc_pic_height_num_minus1 and nnpfc_pic_height_denom_minus 1 may both be inferred to be equal to 0.

The variable nnpfcOutputPicHeight, indicating the height of the luma sample arrays of the picture(s) resulting from applying the NNPF identified by nnpfc_id to the input picture(s), may be derived as shown in Equation 3. $nnpfcOutputPicHeight = Ceil \left(CroppedHeight*\left(nnpfc_pic_height_num_minus1+1\right)\div \left(\begin{matrix} \\ nnpfc_pic_height_denom _ minus 1 + 1\end{matrix}\right)\right)$

The remainder of nnpfcOutputPicHeight divided by outSubHeightC shall be equal to 0.

When nnpfc_pic_width_num_minus 1, nnpfc_pic_width_denom_minus1, nnpfc_pic_height_num minus 1, and nnpfc_pic_height_denom_minus 1 are present, at least one the following contraints may be true:
- The value of nnpfcOutputPicWidth is not equal to CroppedWidth.
- The value of nnpfcOutputPicHeight is not equal to CroppedHeight.

nnpfc_interpolated_pics[ i ] may specify the number of interpolated pictures generated by the NNPF between the i-th picture and the (i + 1)-th picture used as input to the NNPF. The value of nnpfc_interpolated_pics[ i ] may be constrained to be in the range of 0 to 63, inclusive. The value of nnpfc_interpolated_pics[ i ] may be constrained to be greater than 0 for at least one value of i in the range of 0 to nnpfc_num_input_pics_minus1 - 1, inclusive.

The variable NumInpPicsInOutputTensor, which specifies the number of pictures that have a corresponding input picture and are present in the output tensor of the NNPF, the variable InpIdx[ idx ], which specifies the input picture index of the idx-th picture that is present in the output tensor of the NNPF and has a corresponding input picture, and numOutputPics, which specifies the total number of pictures present in the output tensor of the NNPF, may be derived as shown in Table 6.

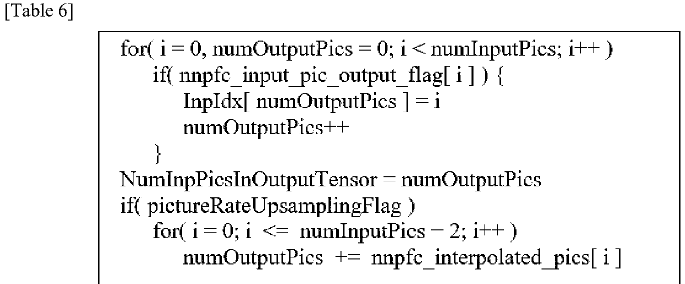

nnpfc_component_last_flag equal to 1 may indicate that the last dimension in the input tensor inputTensor to the NNPF and the output tensor outputTensor resulting from the NNPF is used for a current channel. nnpfc_component_last_flag equal to 0 may indicate that the third dimension in the input tensor inputTensor to the NNPF and the output tensor outputTensor resulting from the NNPF is used for a current channel. The first dimension in the input tensor and in the output tensor is used for the batch index, which is a practice in some neural network frameworks. While formulae in the semantics of this SEI message use the batch size corresponding to the batch index equal to 0, it is up to the post-processing implementation to determine the batch size used as input to the neural network inference. For example, when nnpfc_inp_order_idc is equal to 3 and nnpfc_auxiliary_inp_idc is equal to 1, 7 channels, including four luma matrices, two chroma matrices, and one auxiliary input matrix, may be present in the input tensor. In this case, the process DeriveInputTensors() may derive each of the 7 channels of the input tensor one by one. When a particular one of these channels is processed, that channel may be referred to as the current channel during the process.

nnpfc_inp_format_idc may indicate the method of converting a sample value of the input picture to an input value to the NNPF. When nnpfc_inp_format_idc is equal to 1, the input values to the NNPF may be real numbers, and the functions InpY( ) and InpC( ) may be specified as shown in Equation 4. $\begin{matrix}InpY \left(x\right) = x \div \left(\left(1≪{BitDepth}_{Y}\right)-1\right) \\ InpC \left(x\right) = x \div \left(\left(1≪{BitDepth}_{C}\right)-1\right)\end{matrix}$

When nnpfc_inp_format_idc is equal to 1, the input values to the NNPF may be unsigned integer numbers and the functions InpY() and InpC()may be derived as shown in Table 7.

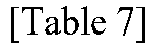

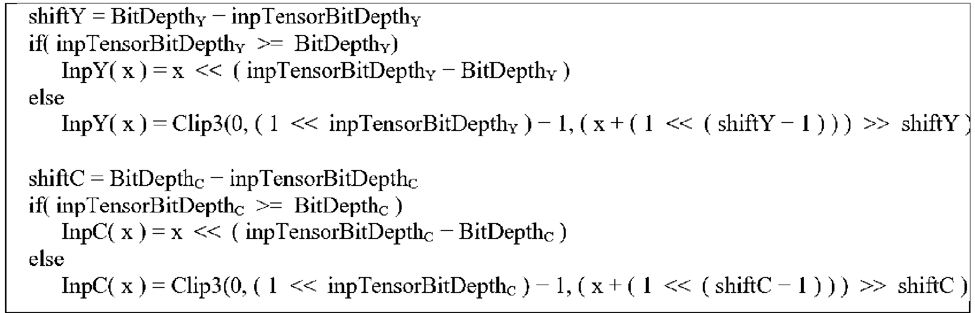

The variable inpTensorBitDepth_{Y} may be derived from the syntax element nnpfc_inp_tensor_luma_bitdepth_minus8 as specified below. The variable inpTensorBitDepthc may be derived from the syntax element nnpfc_inp_tensor_chroma_bitdepth_minus8 as specified below. Values of nnpfc_inp_format_idc greater than 1 may be reserved for future use and shall not be present in bitstreams. Decoders shall ignore NNPFC SEI messages that contain reserved values of nnpfc_inp_format_idc.

nnpfc_auxiliary_inp_idc greater than 0 may indicate that auxiliary input data is present in the input tensor of the NNPF. nnpfc_auxiliary_inp_ide equal to 0 may indicate that auxiliary input data is not present in the input tensor. nnpfc_auxiliary_inp_ide equal to 1 may indicate that auxiliary input data is derived using the method as specified in Tables 10 to 12. The value of nnpfc_auxiliary_inp_ide shall be in the range of 0 to 1, inclusive, in bitstreams. Values of 2 to 255, inclusive, for nnpfc_auxiliary_inp_ide may be reserved for future use and shall not be present in bitstreams. Decoders shall ignore NNPFC SEI messages with nnpfc_auxiliary_inp_ide in the range of 2 to 255, inclusive. Values of nnpfc_auxiliary_inp_idc greater than 255 shall not be present in bitstreams and are not reserved for future use.

mpfc_inp_order_idc may indicate the method of ordering the sample arrays of an input picture to form an input tensor to the NNPF. The value of nnpfc_inp_order_idc shall be in the range of 0 to 3, inclusive, in bitstreams. Values of 4 to 255, inclusive, for nnpfc_inp_order_may be reserved for future use and shall not be present in bitstreams. Decoders shall ignore NNPFC SEI messages with nnpfc_inp_order_idc in the range of 4 to 255, inclusive. Values of nnpfc_inp_order_idc greater than 255 shall not be present in bitstreams and are not reserved for future use. When ChromaFormatIdc is not equal to 1, nnpfc_inp_order_idc shall not be equal to 3. When ChromaFormatIdc is equal to 0, nnpfc_inp_order_idc shall be equal to 0. When chromaUpsamplingFlag is equal to 1, nnpfc_inp_order_idc shall not be equal to 0.

Table 8 contains a description of the values of nnpfc_inp_order_idc.

**[Table 8]**

| **nnpfc_inp_order_idc** | **Description** |
|---|---|
| 0 | If nnpfc_auxiliary_inp_ide is equal to 0, one luma matrix may be present in the input tensor for each input picture, and the number of channels may be 1. Otherwise, when nnpfc_auxiliary_inp_ide is equal to 1, one luma matrix and one auxiliary input matrix may be present, and the number of channels may be 2. |
| 1 | If nnpfc_auxiliary_inp_ide is equal to 0, two chroma matrices may be present in the input tensor, and the number of channels may be 2. Otherwise, when nnpfc_auxiliary_inp_idc is equal to 1, two chroma matrices and one auxiliary input matrix may be present, and the number of channels may be 3. |
| 2 | If nnpfc_auxiliary_inp_idc is equal to 0, one luma and two chroma matrices may be present in the input tensor, and the number of channels may be 3. Otherwise, when nnpfc_auxiliary_inp_idc is equal to 1, one luma matrix, two chroma matrices and one auxiliary input matrix may be present, and the number of channels may be 4. |
| 3 | If nnpfc_auxiliary_inp_ide is equal to 0, four luma matrices and two chroma matrices may be present in the input tensor, and the number of channels may be 6. Otherwise, when nnpfc_auxiliary_inp_idc is equal to 1, four luma matrices, two chroma matrices, and one auxiliary input matrix may be present in the input tensor, and the number of channels may be 7. The luma channels may be derived in an interleaved manner as illustrated in FIG. 4. nnpfc_inp_order_idc can be used only when the input chroma format is 4:2:0. |
| 4...255 | Reserved |

nnpfc_inp_tensor_luma_bitdepth_minus8+8 may specify the bit depth of luma sample values in the input integer tensor. The value of inpTensorBitDepth_{Y} may be derived as shown in Equation 5. ${inpTensorBitDepht}_{Y} = nnpfc_inp_tensor_luma_bitdepth_minus 8 + 8$

The value of nnpfc_inp_tensor_luma_bitdepth_minus8 may be constrained to be in the range of 0 to 24, inclusive.

nnpfc_inp_tensor_chroma_bitdepth_minus8+8 may specify the bit depth of chroma sample values in the input integer tensor. The value of inpTensorBitDepthC may be derived as shown in Equation 6. ${inpTensorBitDepht}_{C} = nnpfc_inp_tensor_chroma_bitdepth_minus 8 + 8$

The value of nnpfc_inp_tensor_chroma_bitdepth_minus8 may be constrained to be in the range of 0 to 24, inclusive.

When nnpfc_auxiliary_inp_ide is equal to 1, the variable strengthControlScaledVal may be derived as shown in Table 9.

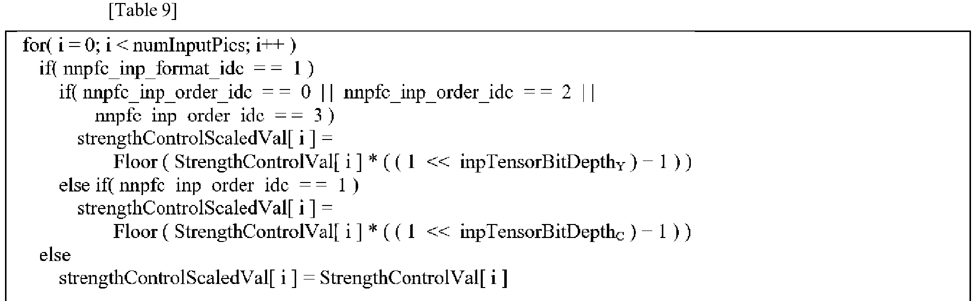

A patch may be a rectangular array of samples from a component (e.g., a luma or chroma component) of a picture.

The process DeriveInputTensors( ) for deriving the input tensor inputTensor for a given vertical sample coordinate cTop and a horizontal sample coordinate cLeft specifying the top-left sample location for the patch of samples included in the input tensor may be represented as the combination of Tables 10 to 12.

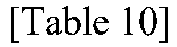

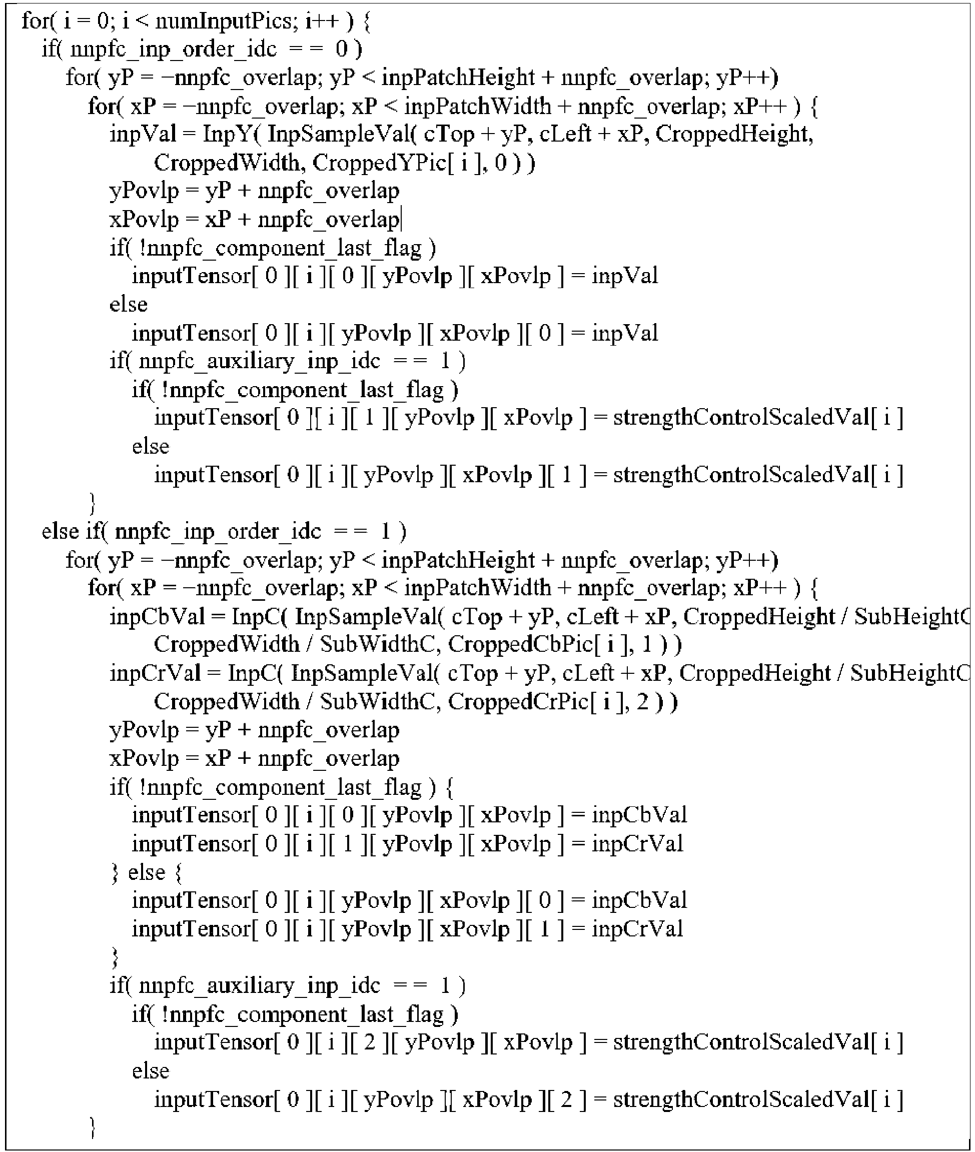

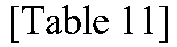

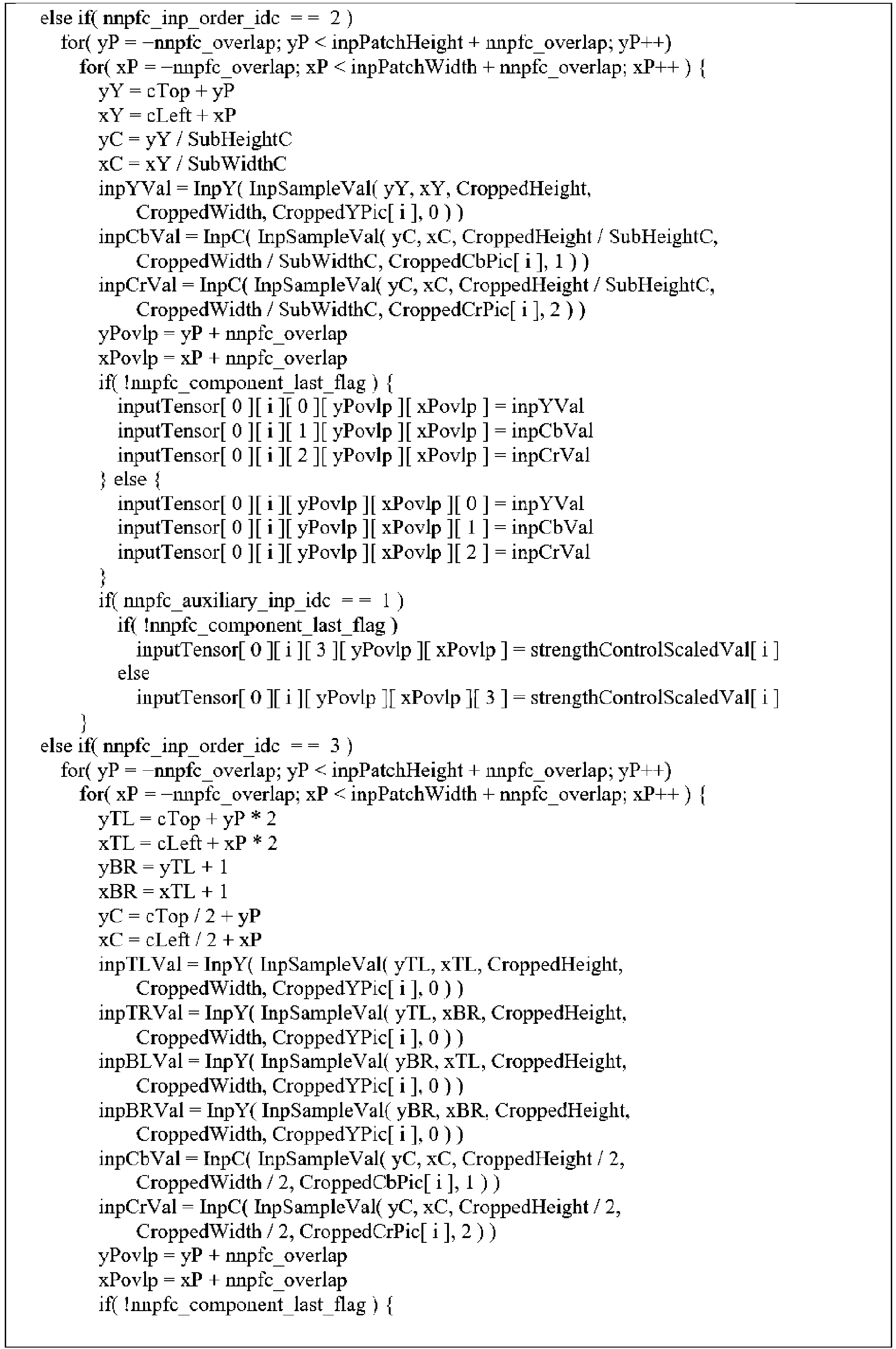

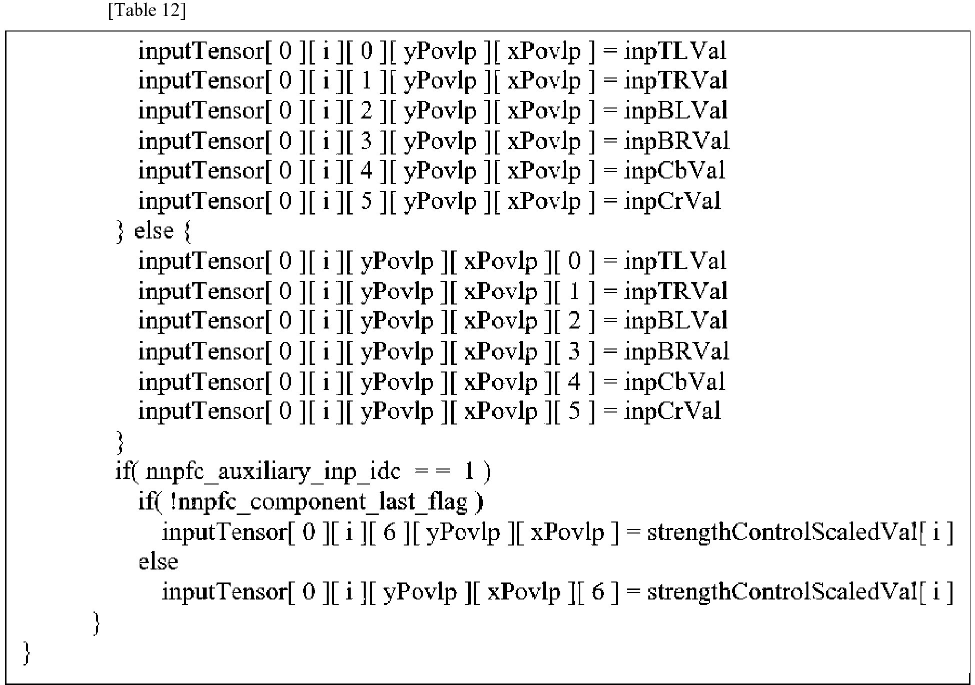

nnpfc_out_format_idc equal to 0 may indicate that the sample values output by the NNPF are real numbers where the value range of 0 to 1, inclusive, maps linearly to the unsigned integer value range of 0 to (1 << bitDepth) - 1, inclusive, for any desired bit depth bitDepth for subsequent post-processing or displaying. nnpfc_out_format_idc equal to 1 may indicate that the luma sample values output by the NNPF are unsigned integer numbers in the range of 0 to (1 << outTensorBitDepth_{Y}) - 1, inclusive, and the chroma sample values output by the NNPF are unsigned integer numbers in the range of 0 to (1 << outTensorBitDepthc) - 1, inclusive. Values of nnpfc_out_format_idc greater than 1 may be reserved for future use and shall not be present in bitstreams. Decoders shall ignore NNPFC SEI messages that contain reserved values of nnpfc_out_format_idc.

nnpfc_out_order_idc may indicate the output order of samples output from the NNPF. The value of nnpfc_out_order_idc shall be in the range of 0 to 3, inclusive, in bitstreams. Values of 4 to 255, inclusive, for nnpfc_out_order_idc may be reserved for future use and shall not be present in bitstreams. Decoders shall ignore NNPFC SEI messages with nnpfc_out_order_idc in the range of 4 to 255, inclusive. Values of nnpfc_out_order_idc greater than 255 shall not be present in bitstreams and are not reserved for future use. When chromaUpsamplingFlag is equal to 1, nnpfc_out_order_idc shall not be equal to 0 or 3. When colourizationFlag is equal to 1, nnpfc_out_order_idc shall not be equal to 0.

Table 13 contains a description of values of nnpfc_out_order_idc.

**[Table 13]**

| **nnpfc_out_order_idc** | **Description** |
|---|---|
| 0 | Only the luma matrix is present in the output tensor, and thus the number of channels may be 1. |
| 1 | Only the chroma matrices are present in the output tensor, and thus the number of channels may be 2. |
| 2 | The luma and chroma matrices are present in the output tensor, and thus the number of channels may be 3. |
| 3 | Four luma matrices and two chroma matrices are present in the output tensor, and thus the number of channels may be 6. This nnpfc_out_order_idc can only be used when the output chroma format is 4:2:0. |
| 4...255 | Reserved |

nnpfc_out_tensor_luma_bitdepth_minus8+8 may specify the bit depth of luma sample values in the output integer tensor. The value of nnpfc_out_tensor_luma_bitdepth_minus8 shall be in the range of 0 to 24, inclusive. The value of outTensorBitDepth_{Y} may be derived as shown in Equation 7. ${outTensorBitDepht}_{Y} = nnpfc_out_tensor_luma_bitdepth_minus 8 + 8$

nnpfc_out_tensor_chroma_bitdepth_minus8+8 may specify the bit depth of chroma sample values in the output integer tensor. The value of nnpfc_out_tensor_chroma_bitdepth_minus8 shall be in the range of 0 to 24, inclusive. The value of outTensorBitDepthc may be derived as shown in Equation 8. ${outTensorBitDepth}_{C} = nnpfc_out_tensor_chroma_bitdepth_minus 8 + 8$

When bitDepthUpsamplingFlag is equal to 1, the value of nnpfc_out_format_idc shall be equal to 1 and at least one of the following conditions may be true:
- nnpfc_out_tensor_luma_bitdepth_minus8 is present, and outTensorBitDepth_{Y} is greater than BitDepth_{Y}.
- nnpfc_out_tensor_chroma_bitdepth_minus8 is present, and outTensorBitDepthc is greater than BitDepthc.

When nnpfc_inp_tensor_luma_bitdepth_minus8, nnpfc_inp_tensor_chroma_bitdepth_minus8, nnpfc_out_tensor_luma_bitdepth_minus8, and nnpfc_out_tensor_chroma_bitdepth_minus8 are present and outTensorBitDepth_{Y} is greater than inpTensorBitDepth_{Y}, outTensorBitDepthc shall not be less than inpTensorBitDepthc. When nnpfc_inp_tensor_luma bitdepth minus8, nnpfc_inp_tensor_chroma_bitdepth_minus8, nnpfc_out_tensor_luma_bitdepth_minus8, and nnpfc_out_tensor_chroma_bitdepth_minus8 are present and outTensorBitDepthc is greater than inpTensorBitDepthc, outTensorBitDepth_{Y} shall not be less than inpTensorBitDepth_{Y}.

The process StoreOutputTensors( ) for deriving sample values in the filtered output sample arrays FilteredYPic, FilteredCbPic, and FilteredCrPic from the output tensor outputTensor for a given vertical sample coordinate cTop and a horizontal sample coordinate cLeft specifying the top-left sample location for the patch of samples included in the input tensor may be represented as the combination of Tables 14 and 15.

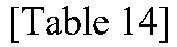

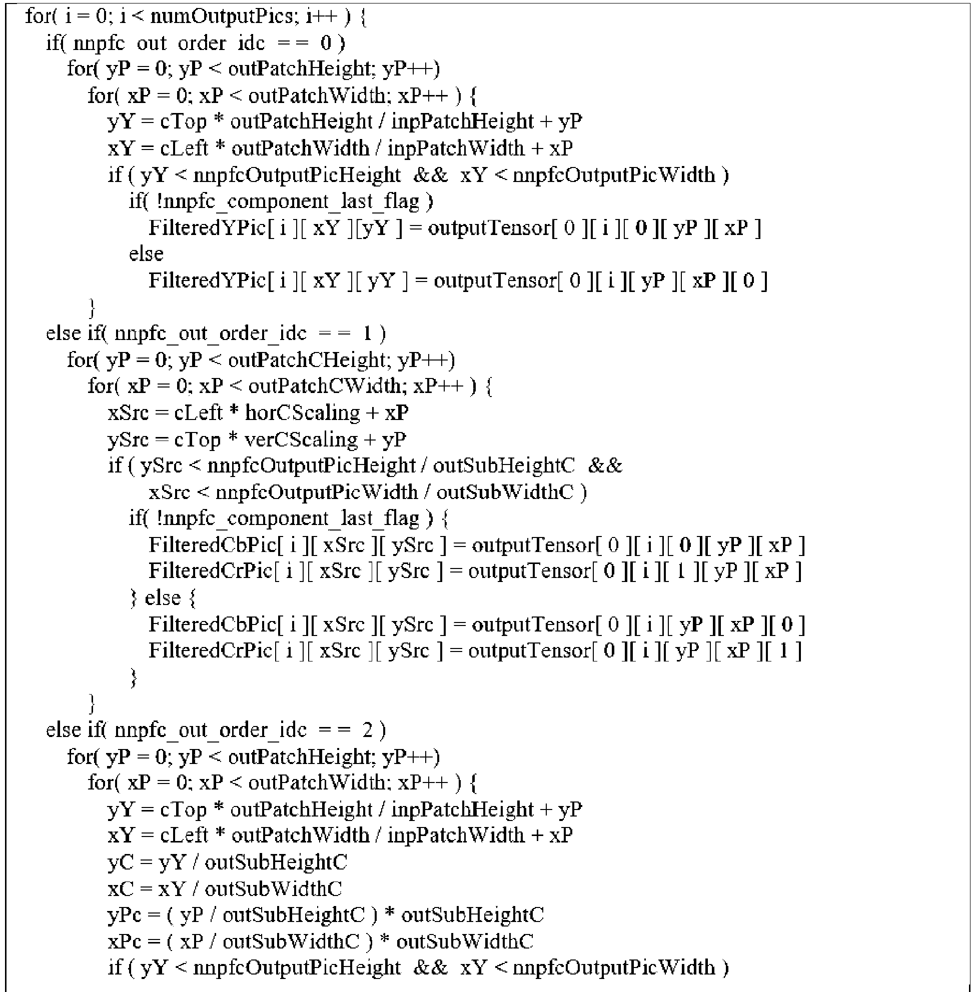

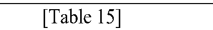

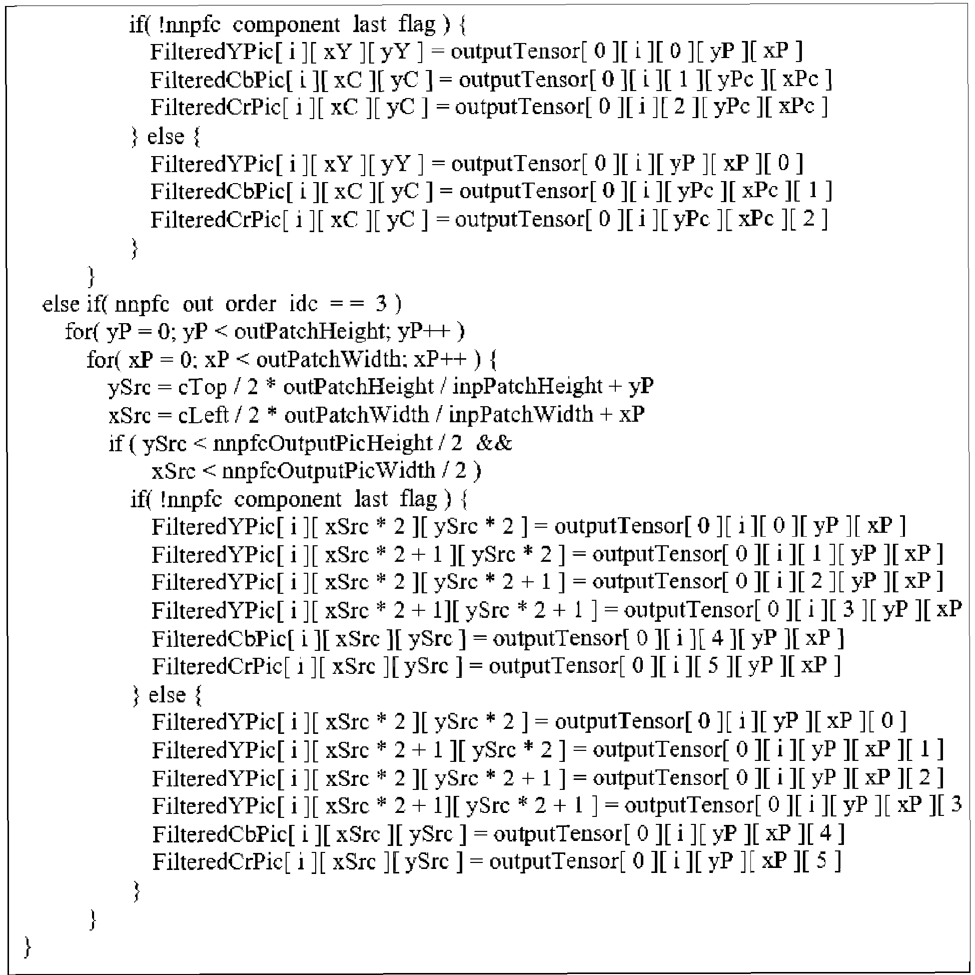

nnpfc_separate_colour_description_present_flag equal to 1 may indicate that a distinct combination of colour primaries, transfer characteristics, matrix coefficients, and scaling and offset values for the picture resulting from the NNPF is specified in the SEI message syntax structure. nnpfc_separate_colour_description_present_flag equal to 0 may indicate that the combination of colour primaries, transfer characteristics, matrix coefficients, and scaling and offset values for the picture resulting from the NNPF is the same as indicated in VUI parameters for the CLVS.

nnpfc_colour_primaries may have the same semantics as defined for the vui_colour_primaries syntax element, except the followings.
- nnpfc_colour_primaries may indicate the colour primaries of the picture resulting from applying the NNPF specified in the SEI message, rather than the colour primaries used for the CLVS.
- When nnpfc_colour_primaries is not present in the NNPFC SEI message, the value of nnpfc _colour_primaries may be inferred to be equal to vui_colour_primaries.

nnpfc_transfer_characteristics may have the same semantics as defined for the vui_transfer_characteristics syntax element, except the followings.
- nnpfc_transfer_characteristics may indicate the transfer characteristics of the picture resulting from applying the NNPF specified in the SEI message, rather than the transfer characteristics used for the CLVS.
- When nnpfc_transfer_characteristics is not present in the NNPFC SEI message, the value of nnpfc_transfer_characteristics may be inferred to be equal to vui_transfer_characteristics.

nnpfc_matrix_coeffs may describe the equations used in deriving luma and chroma signals from the green, blue, and red, or Y, Z, and X primaries. The semantics of nnpfc_matrix_coeffs may apply to the pictures resulting from applying the NNPF specified in this SEI message. As specified for MatrixCoefficients, BitDepth_{Y} and BitDepthc may be equal to outTensorBitDepth_{Y} and outTensorBitDepthc, respectively. When nnpfc_matrix_coeffs is not present in the NNPFC SEI message, the value of nnpfc_matrix_coeffs may be inferred to be equal to vui_matrix_coeffs.

nnpfc_matrix_coeffs shall not be equal to 0 unless both of the following conditions are true.
- nnpfc_out_tensor_chroma_bitdepth_minus8 is equal to nnpfc_out_tensor_luma_bitdepth_minus8.
- nnpfc_out_order_idc is equal to 2, outSubHeightC is equal to 1, and outSubWidthC is equal to 1.

nnpfc_matrix_coeffs shall not be equal to 8 unless one of the following conditions is true.
- nnpfc_out_tensor_chroma_bitdepth_minus8 is equal to nnpfc_out_tensor_luma_bitdepth_minus8.
- nnpfc_out_tensor_chroma_bitdepth_minus8 is equal to nnpfc_out_tensor_luma_bitdepth_minus8 + 1, nnpfc_out_order_idc is equal to 2, outSubHeightC is equal to 2, and outSubWidthC is equal to 1.

nnpfc_full_range_flag may indicate the scaling and offset values applied in association with the matrix coefficients as specified by nnpfc_matrix_coeffs. The semantics of nnpfc_full_range_flag may be as specified for VideoFullRangeFlag. When nnpfc_full_range_flag is not present, the value of nnpfc_full _range_flag may be inferred to be equal to 0.

nnpfc_chroma_loc_info_present_flag equal to 1 may indicate the presence of the nnpfc**_**chroma_sample_loc_type_frame syntax element in the NNPFC SEI message. nnpfc_chroma_loc_info_present_flag equal to 0 may indicate the absence of the nnpfc_chroma_sample_loc_type_frame syntax element in the NNPFC SEI message. When colourizationFlag is equal to 0 or nnpfc_out_colour_format_idc is not equal to 1, the value of nnpfc_chroma_loc_info_present_flag may be constrained to be equal to 0.

When nnpfc_chroma_sample_loc_type_frame is not equal to 6 and nnpfc_out_colour_format_idc is equal to 1, nnpfc**_**chroma_sample_loc_type_frame may indicate the location of chroma samples of the output pictures. nnpfc_chroma_sample_loc_type_frame equal to 6 and nnpfc_out_colour_format_idc equal to 1 may indicate that the location of the chroma samples is unknown or unspecified or specified by other means. The value of nnpfc_chroma_sample_loc_type_frame shall be in the range of 0 to 6, inclusive.

nnpfc_overlap may indicate the overlapping horizontal and vertical sample counts of adjacent input tensors of the NNPF. The value of nnpfc_overlap shall be in the range of 0 to 16 383, inclusive.

nnpfc_constant_patch_size_flag equal to 1 may indicate that the NNPF accepts exactly the patch size indicated by nnpfc_patch_width_minus1 and nnpfc_patch_height_minus1 as input. nnpfc_constant_patch_size_flag equal to 0 may indicate that the NNPF accepts as input any patch size with width inpPatchWidth and height inpPatchHeight. Here, the width of an extended patch (i.e., a patch plus the overlapping area), which is equal to inpPatchWidth+2*nnpfc_overlap, is a positive integer multiple of nnpfc_extended_patch_width_cd_delta_minus1+1+2*nnpfc_overlap, and the height of the extended patch, which is equal to inpPatchHeight+2*nnpfc_overlap, is a positive integer multiple of nnpfc_extended_patch_height_cd_delta_minus1+1+2*nnpfc_overlap.

When nnpfc_constant_patch_size_flag equal to 1, npfc_patch_width_minus1+1 may indicate the horizontal sample counts of the patch size required for the input to the NNPF. The value of nnpfc_patch_width_minus 1 shall be in the range of 0 to Min(32 766, CroppedWidth - 1), inclusive.

When nnpfc_constant_patch_size_flag equal to 1, npfc_patch_height_minus1+1 may indicate the vertical sample counts of the patch size required for the input to the NNPF. The value of nnpfc_patch_height_minus 1 shall be in the range of 0 to Min(32 766, CroppedHeight - 1), inclusive.

When nnpfc_constant_patch_size_flag equal to 0, nnpfc_extended_patch_width_cd_delta_minus 1+ 1 +2 *nnpfc_overlap may indicate a common divisor of all allowed values of the width of an extended patch required for the input to the NNPF. The value of nnpfc_extended_patch_width_cd_delta_minus 1 shall be in the range of 0 to Min(32 766, CroppedWidth - 1), inclusive.

When nnpfc_constant_patch_size_flag equal to 0, nnpfc_extended_patch_height_cd_delta_minus1+1+2*nnpfc_overlap may indicate a common divisor of all allowed values of the height of an extended patch required for the input to the NNPF. The value of nnpfc_extended_patch_height_cd_delta_minus 1 shall be in the range of 0 to Min(32 766, CroppedHeight - 1), inclusive.

The variables inpPatchWidth and inpPatchHeight may be set as the patch size width and the patch size height, respectively.

If nnpfc_constant_patch_size_flag is equal to 0, the following may apply.
- The values of inpPatchWidth and inpPatchHeight may be either provided by external means or set by the post-processor.
- The value of inpPatchWidth+2*nnpfc_overlap shall be a positive integer multiple of nnpfc_extended_patch_width_cd_delta_minus1+1+2*nnpfc_overlap, and inpPatchWidth shall be less than or equal to CroppedWidth. The value of inpPatchHeight+2*nnpfc_overlap shall be a positive integer multiple of nnpfc_extended_patch_height_cd_delta_minus1+1+2*mpfc_overlap, and inpPatchHeight shall be less than or equal to CroppedHeight.

Otherwise (if nnpfc_constant_patch_size_flag is equal to 1), the value of inpPatchWidth may be set equal to nnpfc_patch_width_minus1+1 and the value of inpPatchHeight may be set equal to nnpfc_patch_height_minus1+1.

The variables outPatchWidth, outPatchHeight, horCScaling, verCScaling, outPatchCWidth, and outPatchCHeight may be derived as shown in Table 16.

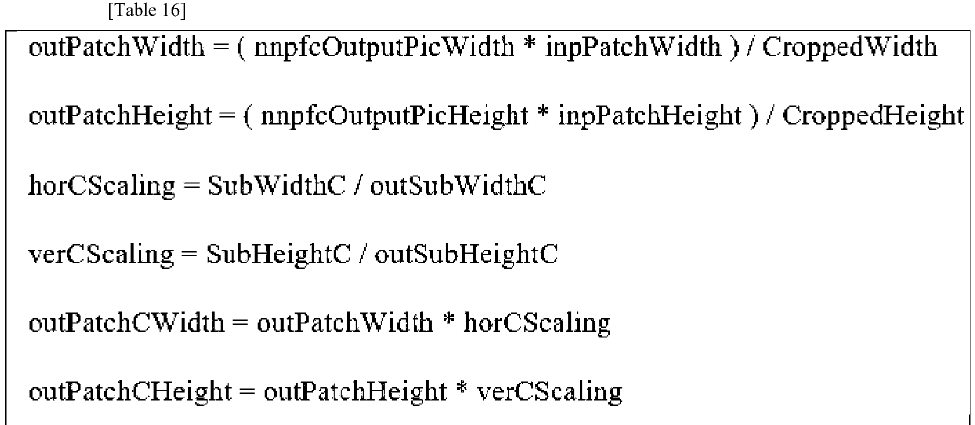

outPatchWidth * CroppedWidth shall be equal to nnpfcOutputPicWidth * inpPatchWidth and outPatchHeight * CroppedHeight shall be equal to nnpfcOutputPicHeight * inpPatchHeight.

nnpfc_padding_type may indicate the process of padding when referencing sample locations outside the boundaries of the input picture as described in Table 17. The value of nnpfc_padding_type shall be in the range of 0 to 4, inclusive. Values of 5 to 15, inclusive, for nnpfc_padding_type may be reserved for future use and shall not be present in bitstreams. Decoders conforming shall ignore NNPFC SEI messages with nnpfc_padding_type in the range of 5 to 15, inclusive. Values of nnpfc_padding_type greater than 15 shall not be present in bitstreams and are not reserved for future use.

**[Table 17]**

| **nnpfc_padding_type** | **Description** |
|---|---|
| 0 | zero padding |
| 1 | replication padding |
| 2 | reflection padding |
| 3 | wrap-around padding |
| 4 | fixed padding |
| 5..15 | reserved |

nnpfc _luma_padding_val may indicate the luma value to be used for padding when nnpfc_padding_type is equal to 4. The value of nnpfc_luma_padding_val shall be in the range of 0 to ( 1 << BitDepthY ) - 1, inclusive.

nnpfc_cb_padding_val may indicate the Cb value to be used for padding when nnpfc_padding_type is equal to 4. The value of nnpfc_cb_padding_val shall be in the range of 0 to ( 1 << BitDepthC ), inclusive.

nnpfc_cr_padding_val may indicate the Cr value to be used for padding when nnpfc_padding_type is equal to 4. The value of nnpfc _cr_padding_val shall be in the range of 0 to ( 1 << BitDepthC ) - 1, inclusive.

The function InpSampleVal(y, x, picHeight, picWidth, croppedPic, cIdx) with inputs being a vertical sample location y, a horizontal sample location x, a picture height picHeight, a picture width picWidth, sample array croppedPic, and component index cIdx (equal to 0 for luma, 1 for Cb, and 2 for Cr) may return the value of sampleVal derived as shown in Table 18.

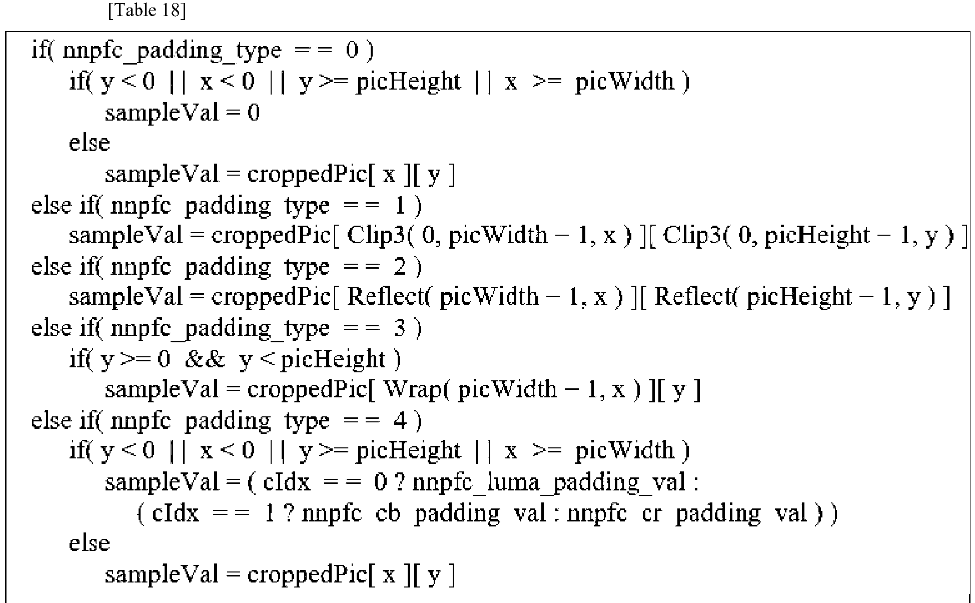

An NNPF PostProcessingFilter( ) is the target NNPF as derived in the semantics of the NNPFA SEI message.

The process in Table 19 may be used, with the NNPF PostProcessingFilter( ), to generate, in a patch-wise manner, the filtered and/or interpolated picture(s). The filtered and/or interpolated picture(s) may contain Y, Cb, and Cr sample arrays FilteredYPic, FilteredCbPic, and FilteredCrPic, respectively, as indicated by nnpfc_out_order_idc.

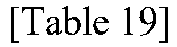

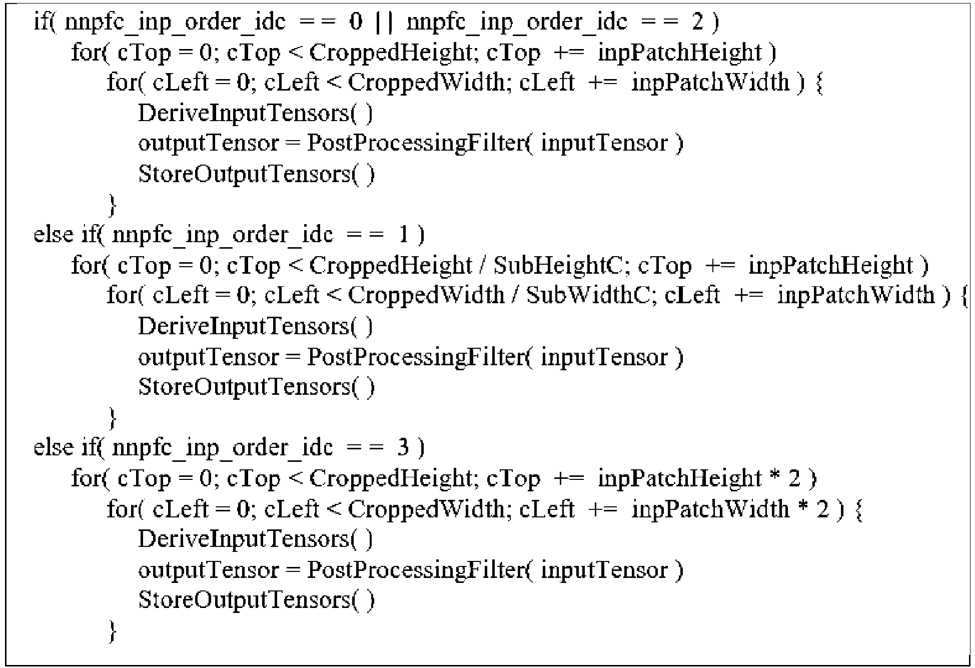

An NNPF-generated picture with index i may contain sample arrays FilteredYPic[ i ], FilteredCbPic[ i ], and FilteredCrPic[ i ], when present. An NNPF-generated picture may not include the overlap regions.

The NNPF process may include outputting NNPF-generated pictures in asencing order of index according to the process defined by Table 19, where all NNPF-generated pictures interpolated by the NNPF may be output, and all NNPF-generated pictures that correspond to any input pictures to the NNPF may be output as specified in the semantics of the NNPFA SEI message.

nnpfc_complexity_info_present_flag equal to 1 may indicate that one or more syntax elements that indicate the complexity of the NNPF associated with nnpfc_id are present. nnpfc_complexity_info_present_flag equal to 0 may indicate that no syntax elements that indicate the complexity of the NNPF associated with the nnpfc_id are present.

nnpfc_parameter_type_idc equal to 0 may indicate that the neural network uses only integer parameters. nnpfc_parameter_type_flag equal to 1 may indicate that the neural network may use floating point or integer parameters. nnpfc_parameter_type_idc equal to 2 may indicate that the neural network uses only binary parameters. nnpfc_parameter_type_idc equal to 3 may be reserved for future use and shall not be present in bitstreams. Decoders shall ignore NNPFC SEI messages with nnpfc_parameter_type_idc equal to 3.

nnpfc_log2_parameter _bit_length_minus3 equal to 0, 1, 2, and 3 may indicate that the neural network does not use parameters of bit length greater than 8, 16, 32, and 64, respectively. When nnpfc_parameter_type_idc is present and nnpfc_log2_parameter_bit_length_minus3 is not present, the neural network may not use parameters of bit length greater than 1.

nnpfc_num_parameters_idc may indicate the maximum number of neural network parameters for the NNPF in units of a power of 2 048. nnpfc _num_parameters_ide equal to 0 may indicate that the maximum number of neural network parameters is unknown. The value nnpfc_num_parameters_idc shall be in the range of 0 to 52, inclusive. Values of nnpfc_num_parameters_idc greater than 52 shall not be present in bitstreams. Decoders shall ignore NNPFC SEI messages with nnpfc_num_parameters_idc greater than 52.

If the value of nnpfc_num_parameters_idc is greater than 0, the variable maxNumParameters may be derived as shown in Equation 9.$maxNumParameters = \left(2 048≪nnpfc_num_parameters_idc\right) - 1$

The number of neural network parameters of the NNPF may be constrained to be less than or equal to maxNumParameters.

nnpfc_num_kmac_operations_idc greater than 0 may indicate that the maximum number of multiply-accumulate operations per sample of the NNPF is less than or equal to nnpfc_num_kmac_operations_idc * 1 000. nnpfc_num_kmac_operations_idc equal to 0 may indicate that the maximum number of multiply-accumulate operations of the network is unknown. The value of nnpfc_num_kmac_operations_idc shall be in the range of 0 to 2³² - 2, inclusive.

nnpfc_total_kilobyte_size greater than 0 may indicate a total size in kilobytes required to store the uncompressed parameters for the neural network. The total size in bits may be a number greater than or equal to the sum of bits used to store each parameter. nnpfc_total_kilobyte_size may be the total size (in bits) divided by 8 000, rounded up. nnpfc_total_kilobyte_size equal to 0 may indicate that the total size required to store the parameters for the neural network is unknown. The value of nnpfc_total_kilobyte_size shall be in the range of 0 to 2³² - 2, inclusive.

nnpfc_metadata_extension_num_bits equal to 0 may indicate that nnpfc_reserved_metadata_extension is not present. nnpfc_metadata_extension_num_bits greater than 0 may indicate the length (in bits) of nnpfc_reserved_metadata_extension. nnpfc_metadata_extension_num_bits shall be equal to 0. Values in the range of 1 to 2 048, inclusive, for nnpfc_metadata_extension_num_bits are reserved for future use and shall not be present in bitstreams. Decoders may allow any value of nnpfc_metadata_extension_num_bits in the range of 0 to 2 048, inclusive. Values of nnpfc_metadata_extension_num_bits greater than 2 048 shall not be present in bitstreams and are not reserved for future use.

nnpfc_reserved_metadata_extension_shall not be present in bitstreams. However, decoders shall ignore the presence and value of nnpfc_reserved_metadata_extension. When nnpfc_reserved_metadata_extension is present, the length of **nnpfc_**reserved_metadata_extension_may be equal to nnpfc_metadata_extension_num bits.

nnpfc_reserved_zero_bit_b shall be equal to 0 in bitstreams. Decoders shall ignore NNPFC SEI messages in which nnpfc_reserved_zero_bit_b is not equal to 0.

nnpfc_payload_byte[ i ] may contain the i-th byte of a bitstream. The byte sequence nnpfc_payload_byte[ i ] for all present values of i shall be a complete bitstream that conforms to ISO/IEC 15938-17.

### Neural-network post-filter activation (NNFPA)

The syntax structure for NNPFA is shown in Table 20.

**[Table 20]**

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_target_base_flag** | u(1) |
| **nnpfa_ persistence_flag** | u(1) |
| **nnpfa_num_output_entries** | ue(v) |
| **for(** i = 0; i < nnpfa_num_output_entries; i++ ) | |
| **nnpfa_output_flag**[ i ] | u(1) |
| } | |
| } | |

The NNPFA syntax structure of Table 20 may be signaled in the form of an SEI message. The SEI message signaling the NNPFA syntax structure of Table 20 may be referred to as an NNPFA SEI message.

The NNPFA SEI message may activate or deactivate the possible use of the target neural-network post-processing filter (NNPF), identified by nnpfa_target_id and nnpfa_target_base_flag, for post-processing filtering of a set of pictures. For a particular picture for which the NNPF is activated, the target NNPF may be derived as follows.
- If nnpfa_target_base_flag is equal to 1, the target NNPF may be the base NNPF with nnpfc_id equal to nnpfa_target_id.
- Otherwise (if nnpfa_target_base_flag is equal to 0), the target NNPF may be the NNPF specified by the last NNPFC SEI message with nnpfc_id equal to nnpfa_target_id. Here, the last NNPFC SEI message may precede the first VCL NAL unit of the current picture in decoding order and may not correspond to a repetition of the NNPFC SEI message that contains the base NNPF.

There may be several NNPFA SEI messages present for the same picture, for example, when the NNPFs are meant for different purposes or for filtering of different color components.

nnpfa_target_id may indicate the target NNPF specified by one or more NNPFC SEI messages that pertain to the current picture and have nnpfc_id equal to nnpfa_target_id. The value of nnpfa_target_id shall be in the range of 0 to 2³² - 2, inclusive.

An NNPFA SEI message with a particular value of nnpfa_target_id shall not be present in a current PU unless one or both of the following conditions are true.
- Within the current CLVS, there is an NNPFC SEI message with nnpfc_id equal to the particular value of nnpfa_target_id present in a PU preceding the current PU in decoding order.
- There is an NNPFC SEI message with nnpfc_id equal to the particular value of nnpfa_target_id in the current PU.

When a PU contains both an NNPFC SEI message with a particular value of nnpfc_id and an NNPFA SEI message with nnpfa_target_id equal to the particular value of nnpfc_id, the NNPFC SEI message shall precede the NNPFA SEI message in decoding order.

nnpfa_cancel_flag equal to 1 may indicate that the persistence of the target NNPF established by any previous NNPFA SEI message with the same nnpfa_target_id as the current SEI message is cancelled. In other words, the target NNPF is no longer used unless it is activated by another NNPFA SEI message with the same nnpfa_target_id as the current SEI message and nnpfa_cancel_flag equal to 0. nnpfa_cancel_flag equal to 0 may indicate that nnpfa_target_base_flag, nnpfa_persistence_flag, and nnpfa_num_output_entries follow.

nnpfa_target_base_flag equal to 1 may indicate that the target NNPF is the base NNPF with nnpfc_id equal to nnpfa_target_id. nnpfa_target_base_flag equal to 0 may indicate that the target NNPF is the NNPF specified by the last NNPFC SEI message with nnpfc_id equal to nnpfa_target_id. Here, the last NNPFC SEI message may precede the first VCL NAL unit of the current picture in decoding order and may not correspond to a repetition of the NNPFC SEI message that contains the base NNPF.

nnpfa_persistence_flag may indicate the persistence of the target NNPF for the current layer. nnpfa_persistence_flag equal to 0 may indicate that the target NNPF may be used for post-processing filtering for the current picture only. nnpfa_persistence_flag equal to 1 may indicate that the target NNPF may be used for post-processing filtering for the current picture and all subsequent pictures in the current layer in output order until one or more of the following conditions are true.
- A new CLVS of the current layer begins.
- The bitstream ends.
- A picture in the current layer associated with an NNPFA SEI message with the same nnpfa_target_id as the current SEI message and nnpfa_cancel_flag equal to 1 is output, following the current picture in output order.

The target NNPF is not applied for the subsequent picture in the current layer associated with an NNPFA SEI message with the same nnpfa_target_id as the current SEI message and nnpfa_cancel_flag equal to 1.

nnpfcTargetPictures may be the set of pictures related to the last NNPFC SEI message with nnpfc_id equal to nnpfa_target_id that precedes the current NNPFA SEI message in decoding order. nnpfaTargetPictures may be the set of pictures for which the target NNPF is activated by the current NNPFA SEI message. Any picture included in nnpfaTargetPictures shall also be included in nnpfcTargetPictures.

nnpfa_num_output_entries may indicate the number of nnpfa_output_flag[ i ] syntax elements present in the NNPFA SEI message. The value of nnpfa_num_num_output_entries shall be in the range of 0 to NumInpPicsInOutputTensor, inclusive.

nnpfa_output_flag[ i ] equal to 1 may indicate that the NNPF-generated picture that corresponds to the input picture having index InpIdx[ i ] is output by the NNPF process activated by the NNPFA SEI message. Here, the NNPF process may be specified in the semantics of the NNPFC SEI message. nnpfa_output_flag[ i ] equal to 0 may indicate that the NNPF-generated picture that corresponds to the input picture having index InpIdx[ i ] is not output by the NNPF process activated by the NNPFA SEI message. When nnpfa_num_output entries is less than NumInpPicsInOutputTensor, nnpfa_output_flag[ i ] may be inferred to be equal to 1 for each value of i in the range of nnpfa_num_output_entries to NumInpPicsInOutputTensor - 1, inclusive.

### Neural-network post-filter group characteristics (NNPFGC)

The syntax structure for NNFPGC is shown in Table 21.

**[Table 21]**

| | |
|---|---|
| nn_post_filter_group_characteristics( payloadSize ) { | **Descriptor** |
| **nnpfgc_id** | ue(v) |
| **nnpfgc_grouping_type** | ue(v) |
| if( nnpfgc_grouping_type = = 0 ∥ nnpfgc_grouping_type = = 2 ) | |
| **unpfgc_purpose** | u(16) |
| **nnpfgc_num_members_minus2** | ue(v) |
| for( i = 0; i <= nnpfgc_num_members_minus2 + 1; i++ ) | |
| **nnpfge_member_id**[ i ] | ue(v) |
| **nnpfgc_complexity_info_present_flag** | u(1) |
| if( impfgc_complexity_info_present_flag ) { | |
| **nnpfgc_parameter_type_idc** | u(2) |
| **if**( nnpfgc_parameter_type_idc != 2 ) | |
| **nnpfgc_log2_parameter_bit_length_minus3** | u(2) |
| **nnpfgc_num_parameters_idc** | u(6) |
| **nnpfgc_num_kmac_operations_idc** | ue(v) |
| **nnpfge_total_kilobyte_size** | ue(v) |
| } | |
| } | |

The NNPFGC syntax structure of Table 21 may be signaled in the form of an SEI message. The SEI message signaling the NNPFGC syntax structure of Table 21 may be referred to as an NNPFGC SEI message.

The NNPFGC SEI message may specify a neural network post-filter group. It may be indicated by the SEI message whether the NNPF group defines an NNPF cascade or defines NNPFs or NNPF groups of NNPF cascades that are alternatives to each other. The use of NNPF groups of NNPF cascades for specific pictures may be indicated with a neural-network post-filter group activation (NNPFGA) SEI message.

nnpfgc_id may contain an identifying number that may be used to identify an NNPF group. The value of nnpfgc_id shall be in the range of 0 to 2³² - 2, inclusive. Values of nnpfgc_id from 256 to 511, inclusive, and from 2³¹ to 2³² - 2, inclusive, may be reserved for future use. Decoders may be constrained to ignore an NNPFGC SEI message with nnpfgc_id in the range of 256 to 511, inclusive, or in the range of 2³¹ to 2³² - 2, inclusive. The value of nnpfgc_id shall not be equal to the value of nnpfc_id in any NNPFC SEI message present in the same CLVS. When the value of nnpfgc_id of an NNPFGC SEI message nnpfgcSeiA is equal to the value of nnpfgc_id of another NNPFGC SEI message nnpfgcSeiB present in the same CLVS, nnpfgcSeiA and nnpfgcSeiB shall be identical.

nnpfgc_grouping_type equal to 0 may indicate that this SEI message may specify a group of cascaded NNPFs. nnpfgc_grouping_type equal to 1 may indicate that the NNPFs or NNPF groups identified by nnpfgc_member_id[ i ] are alternatives to each other out of which the post-processor should select only one to be applied. nnpfgc_grouping_type equal to 2 may indicate that this SEI message may specify a group of NNPFs that are intended to be used jointly or are activated in an alternating manner such that at most one of the NNPFs is activate for any picture. nnpfgc_grouping_type equal to 3 may indicate that the NNPFs or NNPF groups identified by nnpfgc_member_id[ i ] are intended to be used in parallel. nnpfgc_grouping_type equal to 4 may indicate that the NNPFs or NNPF groups identified by nnpfgc_member_id[ i ] are optional, i.e., they may or may not be applied by the post-processor. The value of nnpfgc_grouping_type shall be in the range of 0 to 255, inclusive. Values of nnpfgc_grouping_type in the range of 5 to 255, inclusive, may be reserved for future use and may be constrained not to be present in bitstreams. Decoders may be constrained to ignore NNPFGC SEI messages with nnpfgc_grouping_type in the range of 5 to 255, inclusive.

nnpfgc_purpose may have the semantics of nnpfc_purpose but with the exception that the semantics are specified for the NNPF group defined by the NNPFGC SEI message rather than for the NNPF defined by an NNPFC SEI message.

nnpfgc_num_members_minus2+2 may indicate the number of NNPFs or NNPF groups in the NNPF group that the NNPFGC SEI message defines.

nnpfgc_member_id[ i ] may indicate the i-th member in the NNPF group defined by the NNPFGC SEI message as follows.

If there is an NNPF with nnpfc_id equal to nnpfgc_member_id[ i ] defined in the CLVS, the i-th member in the NNPF group defined by the NNPFGC SEI message may be an NNPF that has nnpfc_id equal to nnpfgc_member_id[ i ].
- Otherwise (if there is no NNPF with nnpfc_id equal to nnpfgc_member_id[ i ] defined in the CLVS), the i-th member in the NNPF group defined by the NNPFGC SEI message may be an NNPF group with nnpfgc_id equal to nnpfgc_member_id[ i ].

When a value of nnpfgc_member_id[ i ] references a value of nnpfgc_id of an NNPFGC SEI message nnpfgcSei, the NNPFGC SEI message nnpfgcSei may be constrained to have nnpfgc_grouping_type equal to 0. When nnpfgc_grouping_type is equal to 0 or 2, there shall be an NNPF with nnpfc_id equal to nnpfgc_member_id[ i ] defined in the CLVS. When nnpfgc_grouping_type is equal to 1, 3, or 4, there shall be an NNPF with nnpfc_id equal to nnpfgc_member_id[ i ] or an NNPF with nnpfgc_id equal to nnpfgc_member_id[ i ] defined in the CLVS. When nnpfgc_grouping_type is equal to 0, the NNPFs with nnpfc_id equal to nnpfgc_member_id[ i ] may be performed in cascade in increasing order of i, as activated by an NNPFGA SEI message with nnpfga_target_id equal to nnpfgc_id. nnpfgc_complexity_info_present_flag, nnpfgc_parameter_type_idc, nnpfgc_log2_parameter_bit_length_minus3, nnpfgc_num_parameters_idc, nnpfgc_num_kmac_operations_idc, and nnpfgc_total_kilobyte_size have the semantics of nnpfc_complexity_info_present_flag, nnpfc_parameter_type_idc, nnpfc_log2_parameter_bit_length_minus3, nnpfc_num_idc, nnpfc_num_kmac_operations_idc, and nnpfc_total_kilobyte_size, respectively, but with the exception that the semantics are specified for the NNPF group defined by this SEI message rather than the NNPF defined by an NNPFC SEI message. When nnpfgc_grouping_type is equal to 1, nnpfgc_complexity_info_present_flag shall be equal to 0.

### Neural-network post-filter group activation (NNPFGA)

The syntax structure for NNFPGA is shown in Table 22.

**[Table 22]**

| | |
|---|---|
| nn_post_filter_group_activation( payloadSize ) { | **Descriptor** |
| **nnpfga_target_id** | ue(v) |
| **nnpfga_cancel_flag** | u(1) |
| if( !nnpfga_cancel_flag ) { | |
| **nnpfga_persistence_flag** | u(1) |
| **nnpfga_num_filters_minus2** | ue(v) |
| for( i = 0; i <= nnpfga_num_filters_minus2 + 1; i++ ) { | |
| **nnpfga_target_base_flag**[ i ] | u(1) |
| **nnpfga_input_all_pics_flag**[ i ] | u(1) |
| if( !nnpfga_input_all_pics_flag[ i ] ) { | |
| **nnpfga_num_input_pics_minus1**[ i ] | ue(v) |
| for( j = 0; j <= nnpfga_num_input_pics_minus1[ i ]; j++ ) | |
| **nnpfga_input_pic_skip_count**[ i ][ j ] | ue(v) |
| } | |
| **nnpfga_num_output_entries**[ i ] | ue(v) |
| for( j = 0; j < nnpfga_num_output_entries[ i ]; j++ ) | |
| **nnpfga_output_flag**[ i ][ j ] | u(1) |
| } | |
| } | |
| } | |

The NNPFGA syntax structure of Table 22 may be signaled in the form of an SEI message. The SEI message signaling the NNPFGA syntax structure of Table 22 may be referred to as an NNPFGA SEI message.

The NNPFGA SEI message may activate or deactivate the possible use of the target NNPFGC, identified by nnpfga_target_id of NNPF groups, for post-processing filtering of a set of pictures. nnpfgc_grouping_type for the identfied NNPF group shall be equal to 0 (cascade) or 1 (alternatives). When nnpfgc_grouping-_type is equal to 1, each member of the group shall have the same number of input pictures and NNPF output pictures. For a particular picture for which the NNPFGC is activated, the target NNPFG may be the NNPFG specified by the last NNPFGC SEI message with nnpfgc_id equal to nnpfga_target_id, that precedes the first VCL NAL unit of the current picture in decoding order. The NNPFs of the target NNPFG may be defined by the NNPFC SEI messages that have nnpfc_id equal to nnpfgc_member_id[i] of the target NNPFG. They may be present in the current picture unit or precede the current picture in decoding order.

Use of the NNPFGC SEI message may require the following definitions.
- Input picture width and height in units of luma samples, InitCroppedWidth[idx] and InitCroppedHeight[idx], of the input pictures with index idx in the range of 0 to numCandInputPics - 1, inclusive, that may be used as input for the NNPFGC.
- Luma sample array InitCroppedYPic[idx] and chroma sample arrays InitCroppedCbPic[idx] and InitCroppedCrPic[idx] of the input pictures with index idx in the range of 0 to numCandInputPics - 1, inclusive, that may be used as input for the NNPFGC.
- Bit depth BitDepth_{Y} for the luma sample array of the candidate input pictures.
- Bit depth BitDepthc for the chroma sample arrays of the candidate input pictures.
- A chroma format indicator, denoted herein by ChromaFormatIdc.
- When nnpfc_auxiliary_inp_ide is equal to 1, a filtering strength control value array StrengthControlVal[idx] that shall contain real numbers in the range of 0 to 1, inclusive, of the input pictures with index idx in the range of 0 to numCandInputPics - 1, inclusive.

The candidate input picture with index 0 may represent the picture for which the NNPFGC is activated by the NNPFGA SEI message. Input pictures with index idx in the range of 1 to numCandInputPics - 1, inclusive, may precede the candidate input picture with index i - 1 in output order. candInputPicList[0] may be the list of candidate input pictures in inverse output order.

nnpfga_target_id may indicate the target NNPFG specified by the NNPFGC SEI message that pertains to the current picture and may have nnpfgc_id equal to nnpfga_target_id. The value of nnpfga_target_id shall be in the range of 0 to 2³² - 2, inclusive. An NNPFGA SEI message with a particular value of nnpfga_target_id shall not be present in a current PU unless there is an NNPFGC SEI message with nnpfgc_id equal to the particular value of nnpfga_target_id and nnpfgc_grouping_type equal to 0 present in the current PU or in a PU that precedes the current PU in decoding order. When a PU contains both an NNPFGC SEI message with a particular value of nnpfgc_id and an NNPFGA SEI message with nnpfga_target_id equal to the particular value of nnpfgc_id, the NNPFGC SEI message shall precede the NNPFGA SEI message in decoding order.

nnpfga_cancel_flag equal to 1 may indicate that the persistence of the target NNPFG established by any previous NNPFGA SEI message with the same nnpfga_target_id as the current SEI message is cancelled. That is, the target NNPFG may be no longer used unless it is activated by another NNPFGA SEI message with the same nnpfga_target_id as the current SEI message and nnpfga_cancel_flag equal to 0. nnpfga_cancel_flag equal to 0 may indicate that the target NNPFG is activated for use.

nnpfga_persistence_flag may indicate the persistence of the target NNPFG for the current layer. nnpfga_persistence_flag equal to 0 may indicate that the target NNPFG may be used for post-processing filtering for the current picture only. nnpfga_persistence_flag equal to 1 may indicate that the target NNPFG may be used for post-processing filtering for the current picture and all subsequent pictures of the current layer in output order until one of the following conditions is true:
- A new CLVS of the current layer begins.
- The bitstream ends.
- A picture in the current layer including an NNPFGA SEI message with the same nnpfga_target_id that follows the current picture in output order.

The target NNPFG is not applied to the subsequent pictures in the current layer related to an NNPFGA SEI message with the same nnpfga_target_id as the current SEI message. nnpfgcTargetPictures be the set of pictures corresponding to the last NNPFGC SEI message with nnpfgc_id equal to nnpfga_target_id that precedes the current NNPFGA SEI message in decoding order. nnpfgaTargetPictures may be the set of pictures for which the target NNPFG is activated by the current NNPFGA SEI message. Any picture included in nnpfgaTargetPictures shall also be included in nnpfgcTargetPictures.

nnpfga_num_filters_minus2 plus 2 may indicate the number of NNPFs in the NNPFG that the NNPFGA SEI message activates. The value of nnpfga_num_filters_minus2 shall be equal to the value of nnpfgc_num_num_members_minus2 in an NNPFGC SEI message with nnpfgc_id equal to nnpfga_target_id.

nnpfga_target_base_flag[i] equal to 1 may indicate that the i-th NNPF in the target NNPFGC is the base NNPF with nnpfc_id equal to nnpfgc_member_id[i] in an NNPFGC SEI message with nnpfgc_id equal to nnpfga_target_id. nnpfga_target_base_flag[i] equal to 0 may indicate that the i-th NNPF in the target NNPFGC is the NNPF specified by the last NNPFC SEI message that has nnpfc_id equal to nnpfgc_member_id[i] in an NNPFGC SEI message with nnpfgc_id equal to nnpfga_target_id. This message may precede the first VCL NAL unit of the current picture in decoding order, and may not be a repetition of the NNPFC SEI message that contains the base NNPF.

nnpfga_input_all_pics_flag[i] equal to 1 may indicate that the input pictures to the i-th NNPF are selected from the list of candidate input pictures candInputPicList[i] without skipping. nnpfga_input_all_pics_flag[i] equal to 0 may indicate that the input pictures to the i-th NNPF are selected from candInputPicList[i] in a manner that some candidate input pictures are skipped.

nnpfga_num_input_pics_minus1[i] may indicate the number of input pictures to the i-th NNPF in the target NNPFG. When nnpfga_num_input_pics_minus1[i] is present, nnpfga_num_input_pics_minus1[i] shall be equal to nnpfc_num_input_pics_minus1 for an NNPF with nnpfc_id equal to nnpfgc_member_id[i] in an NNPFGC SEI message with nnpfgc_id equal to nnpfga_target_id. When nnpfga_num_num_input_pics_minus1[i] is not present, nnpfga_num_input_pics_minus1[i] may be inferred to be equal to nnpfc_num_input_pics_minus 1 for an NNPF with nnpfc_id equal to nnpfgc_member_id[i] in an NNPFGC SEI message with nnpfgc_id equal to nnpfga_target_id.

nnpfga_input_pic_skip_count[i][j] may indicate a j-th picture count that is skipped in the list of candidate input pictures candInputPicList[i] when selecting input pictures for the NNPF activated by the i-th loop entry. When nnpfga_input_pic_skip_count[i][j] is not present, nnpfga_input_pic_skip_count[i][j] may be inferred to be equal to 0 for all values of j in the range of 0 to nnpfga_num_input_pics_minus1[i], inclusive. The variable numCandInputPics, which may indicate the number of candidate input pictures to the NNPFG, may be derived as shown in Table 23.

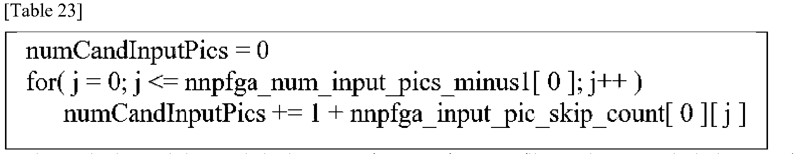

candInputPicList[m] (where m is in the range of 1 to nnpfga_num_filters_minus2 + 1, inclusive) may be a list of pictures in reverse output order. It may be initially empty and formed in descending order of n in the range of 0 to m - 1, inclusive. This list may be configured by including each picture that is output by the NNPF process of the n-th loop entry and is not yet present in candInputPicList[m] and lastly including each picture present in candInputPicList[0] and is not yet present in candInputPicList[m].

When a candidate input picture candInputPicList[m][idx] for any value of m in the range of 1 to nnpfga_num_filters_minus2 + 1, inclusive, is an NNPF output picture of the n-th NNPF process with the value of n being less than the value of m, the width and height of the candidate input picture may be equal to nnpfcOutputPicWidth and nnpfcOutputPicHeight of the NNPF output picture, respectively.

The list of input pictures inputPicList[m] to the NNPF of the m-th loop entry may be derived as shown in Table 24.

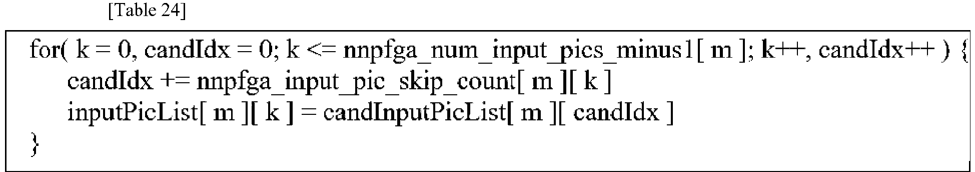

candIdx shall not exceed the number of pictures in candInputPicList[m]. the pictures present in inputPicList[m], for any value of m in the range of 1 to nnpfga_num_filters_minus2 + 1, inclusive, shall have the same width, height, bit depth, and chroma format. For the purpose of interpretation of the NNPFC SEI message with nnpfc_id equal to nnpfgc_member_id[i] in an NNPFGC SEI message with nnpfgc_id equal to nnpfga_target_id, the following variables may be specified for the i-th loop entry.
- The variables BitDepthY, BitDepthC, and ChromaFormatIdc may be used as provided for the interpretation of the NNPFGA SEI message.
- CroppedWidth and CroppedHeight may be set equal to the width and height of the pictures in inputPicList[i], respectively, in units of luma samples.
- For each input picture k in the range of 0 to nnpfga_num_input_pics_minus1[i], inclusive, the following may apply.
   (1) CroppedYPic[k], CroppedCbPic[k], and CroppedCrPic[k] (when present) may be set equal to respective sample array of inputPicList[i] [k]
   (2) When nnpfc_auxiliary_inp_idc is equal to 1 for the NNPF with nnpfc_id equal to nnpfgc_member_id[i] in an NNPFGC SEI message (with nnpfgc_id equal to nnpfga_target_id), the following may apply.
      (2.1) inputPicList[i][k] shall be the same as candInputPicList[0][idx] for any value of idx in the range of 0 to numCandInputPics - 1, inclusive.
      (2.2) StrengthControlVal[k] may be set equal to InitStrengthControlVal[idx].

nnpfga_num_output_entries[i] may indicate the number of nnpfga_output_flag[i][j] syntax elements present in the NNPFGA SEI message. The value of nnpfga_num_output_entries[i] shall be in the range of 0 to NumInpPicsInOutputTensor, inclusive, for an NNPF with nnpfc_id equal to nnpfgc_member_id[i] in an NNPFGC SEI message with nnpfgc_id equal to nnpfga_target_id.

nnpfga_output_flag[i][j] equal to 1 may indicate that the NNPF-generated picture that corresponds to the input picture having index InpIdx[j] derived for the i-th NNPF of the target NNPFG is output by the NNPF process activated by this loop entry. Here, the NNPF process may be specified in the semantics of the NNPFC SEI message. nnpfga_output_flag[i][j] equal to 0 may indicate that the NNPF-generated picture that corresponds to the input picture having index InpIdx[j] derived for the i-th NNPF of the target NNPFG is not output by the NNPF process activated by this loop entry. When nnpfga_num_output_entries[i] is less than NumInpPicsInOutputTensor derived for the i-th NNPF of the target NNPFG, nnpfga_output_flag[i][j] may be inferred to be equal to 1 for each value of i in the range of nnpfga_num_output_entries[i] to NumInpPicsInOutputTensor - 1, inclusive.

NnpfgaOutputPicList, which is the list of pictures output by the NNPF process of the NNPFG in output order, may be initially empty and formed in descending order of n in the range of 0 to nnpfga_num_filters_minus2 + 1, inclusive, by including each picture that is output by the NNPF process of the n-th loop entry and is not yet present in NnpfgaOutputPicList.

### Post-filter hint

The syntax structure of the post-filter hint is shown in Table 25.

**[Table 25]**

| | |
|---|---|
| post_filter_hint( payloadSize ) { | **Descriptor** |
| **filter_hint_cancel_flag** | u(1) |
| if( !filter_hint_cancel_flag ) { | |
| **filter_hint_persistence_flag** | u(1) |
| **filter_hint_size_y** | ue(v) |
| **filter_hint_size_x** | ue(v) |
| **filter_hint_type** | u(2) |
| **filter_hint_chroma_coeff_present_flag** | u(1) |
| for( cIdx = 0; cIdx < ( filter_hint_chroma_coeff_present_flag ? 3 : 1 ); cIdx++ ) | |
| for( cy = 0; cy < filter_hint_size_y; cy++ ) | |
| for( cx = 0; cx < filter_hint_size_x; cx++ ) | |
| **filter_hint_value**[ cIdx ][ cy ][ cx ] | se(v) |
| } | |
| } | |

The syntax structure of the post-filter hint in Table 25 may be signaled in the form of an SEI message. The SEI message signaling the syntax structure of the post-filter hint in Table 25 may be referred to as a post-filter hint SEI message.

The post-filter hint SEI message may provide the coefficients of a post-filter or correlation information for the design of a post-filter for potential use in post-processing of a set of pictures after they are decoded and output to obtain improved displayed quality.

filter_hint_cancel_flag equal to 1 may indicate that the SEI message cancels the persistence of any previous post-filter hint SEI message in output order that applies to the current layer. filter_hint_cancel_flag equal to 0 may indicate that post-filter hint information follows.

filter_hint_persistence_flag may indicate the persistence of the post-filter hint SEI message for the current layer. filter_hint_persistence_flag equal to 0 may indicate that the post-filter hint applies to the current decoded picture only. filter_hint_persistence_flag equal to 1 may indicate that the post-filter hint SEI message applies to the current decoded picture and persists for all subsequent pictures in the current layer in output order until one or more of the following conditions are true.
- A new CLVS of the current layer begins.
- The bitstream ends.
- A picture in the current layer in an AU associated with a post-filter hint SEI message is output that follows the current picture in output order.

filter_hint_size_y may indicate the vertical size of the filter coefficient or correlation array. The value of filter_hint_size_y shall be in the range of 1 to 15, inclusive.

filter_hint_size_x may indicate the horizontal size of the filter coefficient or correlation array. The value of filter_hint_size_x shall be in the range of 1 to 15, inclusive.

filter_hint_type may indicate the type of the transmitted filter hints as specified in Table 26. The value of filter_hint_type shall be in the range of 0 to 2, inclusive. The value of filter_hint_type equal to 3 may be reserved for future use and shall not be present in bitstreams. Decoders shall ignore post-filter hint SEI messages having filter_hint_type equal to 3.

**[Table 26]**

| **Value** | **Description** |
|---|---|
| 0 | Coefficients of a 2D-FIR filter |
| 1 | Coefficients of two 1D-FIR filters |
| 2 | Cross-correlation matrix |

filter_hint_chroma_coeff_present_flag equal 1 may indicate that filter coefficients for chroma are present. filter_hint_chroma_coeff_present_flag equal 0 may indicate that filter coefficients for chroma are not present.

filter_hint_value[ cIdx ][ cy ][ cx ] may indicate a filter coefficient or an element of a cross-correlation matrix between the original signal and the decoded signal with 16-bit precision. The value of filter_hint_value[ cIdx ][ cy ][ cx ] shall be in the range of -2³¹ + 1 to 2³¹ - 1, inclusive. cIdx may denote the related color component, cy may denote a counter in vertical direction and cx may denote a counter in horizontal direction. Depending on the value of filter_hint_type, the following may apply.
- If filter_hint_type is equal to 0, the coefficients of a 2-dimensional finite impulse response (FIR) filter with the size of filter_hint_size_y * filter_hint_size_x may be transmitted.
- Otherwise, if filter_hint_type is equal to 1, the filter coefficients of two 1-dimensional FIR filters may be transmitted. In this case, filter_hint_size_y shall be equal to 2. The index cy equal to 0 may indicate the filter coefficients of the horizontal filter and cy equal to 1 may indicate the filter coefficients of the vertical filter. In the filtering process, the horizontal filter may be applied first and the result may be filtered by the vertical filter.
- Otherwise (if filter_hint_type is equal to 2), the transmitted hints may specify a cross-correlation matrix between the original signal s and the decoded signal s'.

The normalized cross-correlation matrix for a related color component identified by cIdx with the size of filter_hint_size_y * filter_hint_size_x may be defined as follows.$\begin{matrix}filter _ hint _ value \left(cIdx, cy, cx\right) \\ = \frac{1}{{\left({2}^{8 + bitDepth}-1\right)}^{2} ∗ h ∗ w} {\sum }_{m = 0}^{h - 1} {\sum }_{n = 0}^{w - 1} s \left(m, n\right) ∗ s ′ \left(m+cy-OffsetY,n+cx-OffsetX\right)\end{matrix}$

In equation 10, s denotes an array of samples of the color component cIdx of the original picture, s' denotes a corresponding array of the decoded picture, h denotes the vertical height of the related color component, w denotes the horizontal width of the related color component, and bitDepth denotes the bit depth of the color component. OffsetY is equal to ( filter_hint_size_y >> 1 ), OffsetX is equal to ( filter_hint_size_x >> 1 ), 0 <= cy < filter_hint_size_y, and 0 <= cx < filter_hint_size_x.

A decoder may derive a Wiener post-filter from the cross-correlation matrix of the original signal and decoded signal and the auto-correlation matrix of the decoded signal.

### Source Picture Timing Information (SPTI)

The syntax structure for SPTI is shown in Table 27.

**[Table 27]**

| | |
|---|---|
| source_picture_timing_info{ payloadSize ) { | **Descriptor** |
| **spti_cancel_flag** | u(1) |
| if( !spti_cancel_flag) { | |
| **spti_persistence_flag** | u(1) |
| **spti_source_picture_timing_type** | u(8) |
| **spti_source_timing_equals_output_timing_flag** | u(1) |
| if( !spti_source_timing_equals_output_timing_flag ) { | |
| **spti_time_scale** | u(32) |
| **spti_num_units_in_elemental_source_picture_interval** | u(32) |
| **spti_max_sublayers_minus_1** | u(3) |
| for( i = 0; i <= spti_max_sublayers_minus1; i++ ) { | |
| **spti_sublayer_source_picture_interval_scale_factor**[ i ] | ue(v) |
| **spti_sublayer_synthesized_picture_flag**[ i ] | u(1) |
| } | |
| } | |
| } | |
| } | |

The SPTI syntax structure of Table 27 may be signaled in the form of an SEI message. The SEI message signaling the SPTI structure of Table 27 may be referred to as an SPTI SEI message.

The SPTI SEI message may indicate the temporal distance between source pictures related to the corresponding decoded output pictures prior to encoding. For example, for camera-captured content, the temporal distance between source pictures may represent the difference between the time at which an image sensor is exposed to produce a source picture related to the current decoded picture and the time at which the image sensor is exposed to produce the source picture related to a previous decoded picture in output order.

spti_cancel_flag equal to 1 may indicate that the SPTI SEI message cancels the persistence of any previous SPTI SEI message that applies to the current layer. spti_cancel_flag equal to 0 may indicate that source picture timing information follows.

spti_persistence_flag may specify the persistence of the SPTI SEI message for the current layer. spti_persistence_flag equal to 0 may specify that the SPTI SEI message applies to the current decoded picture only. spti_persistence_flag equal to 1 may specify that the SPTI SEI message applies to the current decoded picture and persists for all subsequent pictures of the current layer in output order until one or more of the following conditions are true.
- A new CLVS of the current layer begins.
- The bitstream ends.
- A picture in an AU including an SPTI SEI message is output that follows the current picture in output order.

As shown in Table 28, spti_source_picture_timing_type may indicate the timing relationship between source pictures and corresponding decoded output pictures. (spti_source_picture_timing_type & bitMask) not equal to 0 may indicate that the timing relationship has an interpretation associated with the value of bitMask. When spti_source_picture_timing_type is greater than 0 and (spti_source_picture_timing_type & bitMask) is equal to 0, the interpretation associated with the value of bitMask is not applicable to the SPTI SEI message. When spti_source_picture_timing_type is equal to 0, the timing relationship may be specified by the application.

The value of spti_source_picture_timing_type shall be in the range of 0 to 127, inclusive. Values of 128 to 255, inclusive, for spti_source_picture_timing_type may be reserved for future use and shall not be present in bitstreams. Decoders shall ignore SPTI SEI messages with spti_source_picture_timing_type in the range of 128 to 255, inclusive.

**[Table 28]**

| **bitMask** | **Interpretation** |
|---|---|
| 0x01 | Slow motion |
| 0x02 | Frame rate conversion |
| 0x04 | High-speed imaging |
| 0x08 | Time-lapse imaging |
| 0x10 | Temporal reversal |
| 0x20 | Still image / freeze frame |
| 0x40 | Sporadic or event-driven |

The variable temporalReversalFlag may be equal to ( spti_source_picture_timing_type & 0x10 )? 1 : 0. spti_source_timing_equals_output_timing_flag equal to 1 may indicate the timing of source pictures is the same as the timing of corresponding decoded output pictures. spti_source_timing_equals_output_timing_flag equal to 0 may indicate the timing of source pictures may not be the same as the timing of corresponding decoded output pictures. When spti_source_timing_equals_output_timing_flag is equal to 1 and a picture timing SEI message is present for the current picture, source picture timing may be determined from information conveyed in the picture timing SEI message.

spti_time_scale may indicate the number of time units that pass in one second. The value of spti_time_scale shall not be equal to 0. For example, a time coordinate system that uses a 27 MHz clock has spti_time_scale of 27,000,000.

spti_num_units_in_elemental_source_picture_interval may indicate the number of time units of a clock operating at the frequency spti_time_scale Hz that corresponds to the elemental source picture interval of consecutive pictures in output order in the CLVS. The indicated elemental source picture interval, i.e., the interval indicated by the variable ElementalSourcePictureInterval may be in units of seconds, and may be equal to spti_num_units_in_elemental_source_picture_interval divided by spti_time_scale. For example, when the elemental source picture interval is 0.04 seconds, spti_time_scale may be set to 27,000,000 and spti_num_units_in_elemental_source_picture_interval may be set to 1,080,000.

spti_max_sublayers_minus_1+1 may indicate the maximum number of temporal sublayers that may be present in the CLVS.

spti_sublayer_source_picture_interval_scale_factor[i], when present, may indicate a scale factor used in determining the source picture interval of consecutive pictures in output order in the CLVS having TemporalId equal to i. For spti_sublayer_source_picture_interval_scale_factor[i], the value 0 may be used to indicate that the source picture corresponding to the current decoded output picture is identical to the source picture corresponding to the previous decoded output picture.

The source picture interval related to output pictures having TemporalId less than or equal to I may be denoted by the variable SourcePictureInterval[i], in units of seconds, and may be derived as shown in Equation 11.
$SourcePictureInterval \left[i \right] = ElementalSourcePictureInterval * spti sublayer source picture interval scale factor \left[ i\right]$

When picture n is an output picture with TemporalId less than or equal to I and is not the first picture in the bitstream in output order, the value of the variable SourcePictureTime[ n ] may be derived as follows:
- If temporalReversalFlag is equal to 0, SourcePictureTime[ n ] = SourcePictureTime[ previousPicInOutputOrder ] + SourcePictureInterval[ i ];
- Otherwise, if temporalReversalFlag is equal to 1, SourcePictureTime[ n ] = SourcePictureTime[ previousPicInOutputOrder ] - SourcePictureInterval[ i ],

Where previousPicInOutputOrder may denote the last output picture preceding picture n in output order that has TemporalId less than or equal to i (if such a picture is present). If the value of SourcePictureTime[0] is not provided by external means, the value of SourcePictureTime[0] may be inferred to be equal to 0.

When spti_sublayer_synthesized_picture_flag[i] is present, spti_sublayer_synthesized_picture_flag[i] equal to 1 may indicate that decoded output pictures belonging to the i-th temporal sublayer are synthesized and do not correspond to unmodified original source pictures. spti_sublayer_synthesized_picture_flag[i] equal to 0 provides no such indication. When spti_sublayer_synthesized_picture_flag[i] is not present, the value of spti_sublayer_synthesized_picture_flag[i] may be inferred to be equal to 0.

### Problems of the Conventional Technology

The picture whose association with a source picture is provided by the semantics of the SPTI SEI message (for example, it may be expressed as picture 0 or anchor picture or first source timing picture or standard picture, but hereinafter it is consistently referred to as picture 0) may be supposed to be a picture under a specific condition (for example, the first output picture). However, in this case, it is unclear in the current design which picture is to be the first output picture, that is, which picture is to be called picture 0.

In other words, due to the lack of an exact definition for picture 0, picture 0 may be classified as one or more pictures. For example, picture 0 may be classified as the first picture in a bitstream, the first picture in the CVS/CLVS, or the first picture associated with an SEI message (for example, in terms of the SEI message). Accordingly, the meaning of picture 0 becomes ambiguous.

In addition, the current design includes a feature related to whether a picture associated with an SPTI SEI message is a synthesized picture or not. picture 0 may be constrained not to be associated with a synthesized picture because the synthesized picture is not associated with a source picture, namely, it does not have an associated source picture. However, the current design does not have any related constraint, and may thus cause a problem.

### Overview of Embodiments

The present disclosure proposes various embodiments capable of addressing issues of conventional designs, including the above. The following embodiments may be used independently or in combination with each other or other embodiments, and may also be combined with the embodiments described above, which shall also be included in the present disclosure.
1. Picture 0 for computation of a specific syntax of an SPTI SEI message (as an example, a syntax associated with source picture timing may be included, such as, for example, sourcepictureTime[0]) may be specified as a picture in the same access unit (AU) that contains the SEI message.
2. A constraint may be specified that picture 0 shall not be a synthesized picture because it does not have a corresponding source picture.
3. A temporal identifier (TemporalId) of picture 0 may be constrained to a specific value (e.g., 0).

In the following description, various embodiments including the above embodiments are described in more detail, and improvements for pictures in a neural-network post-filter (NNPF) SEI message of a coded video bitstream are presented. Although the embodiments described below are based on standard video codecs (e.g., VVC (Versatile Video Coding), etc.) and VSEI (Versatile Supplemental Enhancement Information Messages for Coded Video Bitstreams), it is apparent that they can be applied to other video coding technologies, which shall also be included in the content of the present disclosure.

In describing the embodiments below, a neural-network post-filter (NNPF) SEI message or an NNPF-related SEI message may include a neural-network post-filter characteristic (NNPFC) SEI message and/or a neural-network post-filter activation (NNPFA) SEI message.

Since the names of syntaxes used in describing the embodiments below are arbitrarily designated for clarity of description, it is apparent that the names of the syntaxes can be changed, and even if the names of the syntaxes are changed, they shall be included in the present disclosure.

Hereinafter, embodiments of the present disclosure will be described in detail with reference to the drawings.

### Embodiment

In the following embodiment, the embodiments of items 1, 2, and 3 described in the Overview of Embodiments will be described in detail. In the following, VSEI message syntax and semantics will be described.

As an example, syntax and semantics of a neural-network post-filter (NNPF) related SEI message (e.g., NNPFA SEI message, etc.) may be partially modified.

As an example, suppose that picture 0 is a picture of the same access unit as the SPTI SEI message and picture N is the N-th picture from picture 0, where N is greater than 0. As an example, when TEMPORALID of picture N is less than or equal to an arbitrary value i and is not the first picture of the bitstream, source picture timing related information (e.g., SourcePictureTime[ n ]) may be derived as follows.

When specific information (e.g., temporalReversalFlag, etc.) is equal to a specific value (e.g., 0), the source picture timing related information SourcePictureTime[ n ] may be derived based on SourcePictureTime[ previousPicInOutputOrder ] and information on a source picture interval. For example, SourcePictureTime[ n ] may be derived based on an addition operation of SourcePictureTime[ previousPicInOutputOrder ] and SourcePictureInterval[ i ] (SourcePictureTime[ previousPicInOutputOrder ] + SourcePictureInterval[ i ]).

When specific information (e.g., temporalReversalFlag, etc.) is equal to a specific value (e.g., 1), the source picture timing related information SourcePictureTime[ n ] may be derived based on SourcePictureTime[ previousPicInOutputOrder ] and information on the source picture interval. For example, SourcePictureTime[ n ] may be derived based on a subtraction operation of SourcePictureTime[ previousPicInOutputOrder ] and SourcePictureInterval[ i ] (SourcePictureTime[ previousPicInOutputOrder ] - SourcePictureInterval[ i ]).

Here, as an example, previousPicInOutputOrder may be the last output picture that has a temporal identifier (TemporalId) less than or equal to a specific threshold (e.g., denoted as i) and precedes picture n in output order. When the value of the source picture timing related information (SourcePictureTime[0]) is not provided based on other syntax or other information, SourcePictureTime[0] may be inferred to be equal to a specific value (e.g., 0). Also, as an example, the temporal identifier of picture 0 (e.g., anchor picture, reference picture, first source timing picture.) may be constrained to a specific value (e.g., 0).

As an example, when present, synthesized picture related information spti_sublayer_synthesized_picture_flag[ i ] equal to 1 may indicate that decoded output pictures belonging to the i-th temporal sublayer are do not correspond to unmodified original source pictures. In contrast, the information equal to 0 may provide no such indication. Also, when the syntax is not present, the value of the syntax may be inferred to be equal to a specific value (e.g., 0).

Picture 0 (e.g., reference picture, anchor picture, first source timing picture, etc.) may be constrained not to be a picture that belongs to a synthesized temporal layer.

According to the embodiments described in the present disclosure, the issues of the conventional technology described above may be addressed. Further, decoder errors may be reduced and coding quality and efficiency may be improved by diversifying variables, syntaxes, and/or semantics of information, clarifying constraints on the information, or clarifying semantics of the information.

### Embodiments of Image Decoding Method and Encoding Method

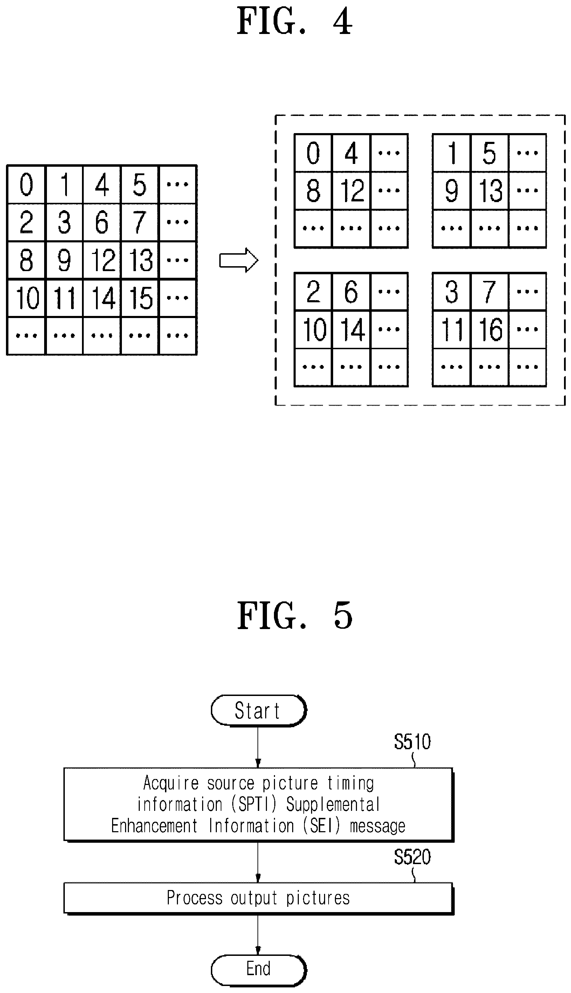

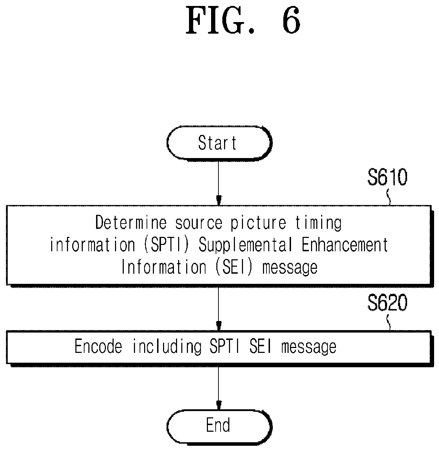

Hereinafter, an image encoding method and an image decoding method according to various embodiments of the present application will be described. The image decoding method of FIG. 5 may be performed by the image decoding apparatus 200, and the image encoding method of FIG. 6 may be performed by the image encoding apparatus 100. Also, the image decoding and encoding methods of FIGS. 5 and 6 may be based on the embodiments described above respectively, as well as the examples described below.

FIG. 5 illustrates an image decoding method that may be performed by an image decoding apparatus according to an embodiment of the present disclosure.

First, a source picture timing information (SPTI) supplemental enhancement information (SEI) message may be obtained (S510). As an example, the SPTI SEI message may be signaled as a bitstream, and an image may be reconstructed based on the obtained SPTI SEI message (S520).

As an example, the SPTI SEI message may include information on source picture timing for a picture related to SEI. The source picture timing may be derived based on an anchor picture. As an example, the anchor picture may be expressed as picture 0, a standard picture, a first source timing picture, or the like, and a value of a temporal identifier of the anchor picture may be equal to a specific value (e.g., 0). Also, as an example, the anchor picture may not belong to a synthesized temporal layer, which may be one constraint. In addition, the anchor picture may be included in an access unit identical to an access unit including the SPTI SEI message. The source picture timing may be derived for a specific picture based on an order with respect to the anchor picture. The order may include, as an example, an output order with respect to the anchor picture. Other descriptions are the same as those given above, and thus redundant descriptions are omitted.

Since the image decoding method of FIG. 5 corresponds to an embodiment of the present disclosure, it will be apparent that certain steps may be changed, the order of steps may be changed, or some steps may be added or removed, and cases with such modifications are also within the scope of the present disclosure.

FIG. 6 illustrates an image encoding method that may be performed by an image encoding apparatus according to an embodiment of the present disclosure. The image encoding method of FIG. 6 may also be performed based on the following description as well as the embodiments described above. The description presented based on the decoder above may also be applied to an image encoding method as long as it does not conflict with the operation of an encoder.

As an example, a source picture timing information (SPTI) supplemental enhancement information (SEI) message may be determined (S610). The determining of the SPTI SEI message may include determining information to be included in the SPTI SEI message. Thereafter, a bitstream including the SPTI SEI message may be encoded (S620). In other words, the SPTI SEI message may be encoded, and the SPTI SEI message may be signaled.

As described above, as an example, the SPTI SEI message may include information on source picture timing for a picture related to SEI. The source picture timing may be determined based on an anchor picture. As an example, the anchor picture may be expressed as picture 0, a standard picture, a first source timing picture, or the like, and a value of a temporal identifier of the anchor picture may be equal to a specific value (e.g., 0). Also, as an example, the anchor picture may not belong to a synthesized temporal layer, which may be one constraint. In addition, the anchor picture may be included in an access unit identical to an access unit including the SPTI SEI message. The source picture timing may be determined for a specific picture based on an order with respect to the anchor picture. The order may include, as an example, an output order with respect to the anchor picture. Other descriptions are the same as those given above, and thus redundant descriptions are omitted.

Thereafter, although not illustrated in the drawings, a picture may be reconstructed based on output picture information.

Also, as an example, a computer-readable medium having recorded thereon a bitstream generated by an image encoding method may be provided, and a method of transmitting a bitstream generated by the image encoding method may be provided.

Since the image encoding method of FIG. 6 corresponds to an embodiment of the present disclosure, it will be apparent that certain steps may be changed, the order of steps may be changed, or some steps may be added or removed, and cases with such modifications are also within the scope of the present disclosure.

According to the present disclosure, the meaning of information that may be included in VSEI may be clarified, thereby reducing decoder errors and expressing more accurate scenarios. Accordingly, coding quality may be improved. Furthermore, according to the present disclosure, clear processing may be implemented in a case where a corresponding output picture is generated but an input picture is not present. Therefore, coding efficiency may be improved.

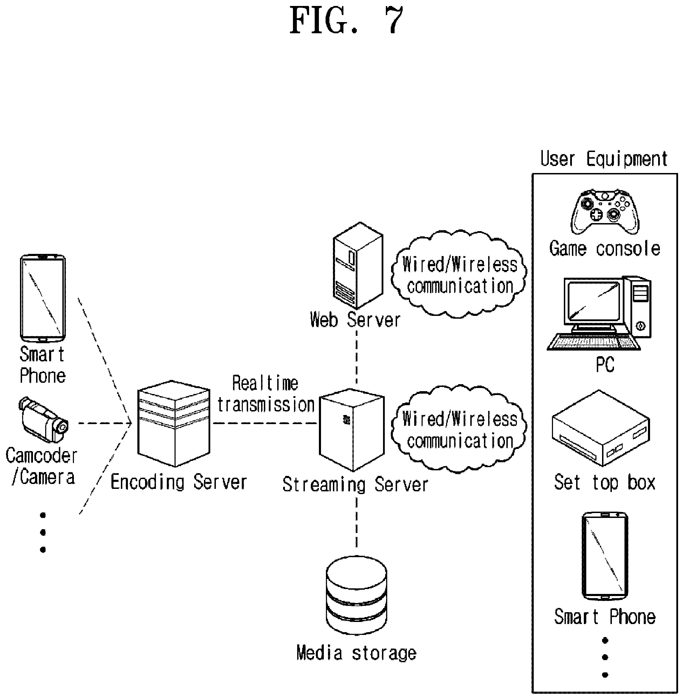

FIG. 7 is a diagram illustrating an exemplary content streaming system to which embodiments of the present disclosure are applicable.

As shown in FIG. 7, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus 100, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user devices may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktop computers, digital signage, and the like.

Each server in the content streaming system may be operated as a distributed server, in which case data received from each server may be distributed.

The scope of the disclosure includes software or machine-executable instructions (e.g., an operating system, an application, firmware, a program, etc.) for enabling operations according to the methods of various embodiments to be executed on an apparatus or a computer, a non-transitory computer-readable medium having such software or instructions stored thereon and executable on the apparatus or the computer.

### [Industrial Applicability]

The embodiments of the present disclosure may be used to encode or decode images.

## Claims

1. An image decoding method, comprising:
acquiring a source picture timing information (SPTI) supplemental enhancement information (SEI) message, and
reconstructing an image based on the SPTI SEI message,
wherein the SPTI SEI message includes information on source picture timing for a picture related to SEI.

2. The image decoding method of claim 1, wherein the source picture timing is derived based on an anchor picture.

3. The image decoding method of claim 2, wherein a value of a temporal identifier of the anchor picture is equal to 0.

4. The image decoding method of claim 2, wherein the anchor picture is constrained not to belong to a synthesized temporal layer.

5. The image decoding method of claim 2, wherein the anchor picture is included in an access unit identical to an access unit including the SPTI SEI message.

6. The image decoding method of claim 2, wherein the source picture timing is derived for a specific picture based on an order with respect to the anchor picture.

7. An image encoding method, comprising:
determining a source picture timing information (SPTI) supplemental enhancement information (SEI) message, and
encoding a bitstream including the SPTI SEI message,
wherein the SPTI SEI message includes information on source picture timing for a picture related to SEI.

8. The image encoding method of claim 7, wherein the source picture timing is derived based on an anchor picture.

9. The image encoding method of claim 8, wherein a value of a temporal identifier of the anchor picture is equal to 0.

10. A non-transitory computer-readable medium including a bitstream generated by an image encoding method, the image encoding method comprising:
determining a source picture timing information (SPTI) supplemental enhancement information (SEI) message, and
encoding a bitstream including the SPTI SEI message,
wherein the SPTI SEI message includes information on source picture timing for a picture related to SEI.

11. A method of transmitting a bitstream generated by an image encoding method, the method comprising:
transmitting the bitstream,
wherein the image encoding method comprises:
determining a source picture timing information (SPTI) supplemental enhancement information (SEI) message, and encoding a bitstream including the SPTI SEI message,
wherein the SPTI SEI message includes information on source picture timing for a picture related to SEI.
